# EUROPÄISCHE PATENTSCHRIFT

(11) **EP 2 582 552 B1**
(45) Veröffentlichungstag und Bekanntmachung des Hinweises auf die Patenterteilung: **23.07.2014**
(21) Anmeldenummer: 11737905.7
(22) Anmeldetag: 09.06.2011
(51) Int. Cl.: B60R 21/239

(54) **AIRBAGMODUL FÜR EIN KRAFTFAHRZEUG**
AIRBAG MODULE FOR A MOTOR VEHICLE
MODULE D'AIRBAG POUR VÉHICULE AUTOMOBILE

(30) Priorität: 06.01.2011 DE 202011001429 U; 27.08.2010 DE 102010039895; 15.06.2010 DE 102010024384
(43) Veröffentlichungstag der Anmeldung: 24.04.2013
(73) Patentinhaber: Takata AG, 63743 Aschaffenburg (DE)
(72) Erfinder: ECKERT, Nick, 12587 Berlin (DE); WOLLNY, Frank, 14199 Berlin (DE); BUCHHOLZ, Andre, 10249 Berlin (DE); HEYM, Axel, 13156 Berlin (DE); BÖSE, Matthias, 13158 Berlin (DE); LAZAR, Rolf, 12683 Berlin (DE); PROST-FIN, Marc, 13187 Berlin (DE); HOFMANN, Thomas, 63739 Aschaffenburg (DE); FECHNER, Tobias, 63743 Aschaffenburg (DE)
(74) Vertreter: Staroske, Sandro
(86) Internationale Anmeldenummer: PCT/EP2011/059614
(87) Internationale Veröffentlichungsnummer: WO 2011/157631

(56) Entgegenhaltungen:
- WO-A1-2009/034752
- DE-A1-102005 039 418
- GB-A- 2 306 409
- US-A1- 2004 012 179
- US-A1- 2009 160 169

## Beschreibung

Die Erfindung betrifft ein Airbagmodul für ein Kraftfahrzeug nach dem Oberbegriff des Anspruchs 1.

Ein derartiges Airbagmodul umfasst einen Gassack, der zum Schutz einer Person mittels eines Gasgenerators aufblasbar ist, sowie mindestens eine Entlüftungsöffnung, durch die hindurch aus dem Airbagmodul stammendes Gas (welches vom Gasgenerator zum Aufblasen des Gassackes freigesetzt wurde) aus dem Airbagmodul entweichen (austreten) kann, und weiterhin eine Vorrichtung zur Steuerung des Austrittsquerschnitts der Entlüftungsöffnung, die mindestens ein Abdeckteil aufweist, mit dem die Entlüftungsöffnung überdeckbar ist, um diese zumindest teilweise zu verschließen, und die weiterhin einen Betätigungsmechanismus aufweist, der mit dem Abdeckteil zusammenwirkt, um den Austrittsquerschnitt der Entlüftungsöffnung zu verändern.

Mit einer derartigen Vorrichtung ist es möglich, das sogenannte Entlüften eines Gassackes, d.h., das Ablassen derjenigen Gase, welche zum Schutz eines Fahrzeuginsassen von einem Gasgenerator freigesetzt und in den Gassack eingebracht wurden, gezielt zu steuern, etwa in Abhängigkeit von der Art und Schwere eines Unfalls sowie von der Größe und/oder dem Gewicht und/oder der Sitzposition der zu schützenden Person, was insbesondere mittels Sensoren erfasst werden kann.

Vorliegend ist vorgesehen, dass der Betätigungsmechanismus eine Gasquelle und ein mittels der Gasquelle aufblasbares Element aufweist, welches beim Aufblasen derart mit dem Abdeckteil zusammenwirkt, dass es eine Änderung des Austrittsquerschnittes der Entlüftungsöffnung bewirkt.

Die Gasquelle kann beispielsweise (sensorgesteuert) pyrotechnisch gezündet werden und setzt dann ein Gas frei, mit dem das aufblasbare Element befüllt wird, wodurch es mit dem der Entlüftungsöffnung zugeordneten Abdeckteil zusammenwirkt bzw. auf dieses einwirkt, so dass sich im Ergebnis der Austrittsquerschnitt der Entlüftungsöffnung ändert.

Dabei kann gemäß einer Variante das Abdeckteil die Entlüftungsöffnung ursprünglich überdecken, so dass der Betätigungsmechanismus vorgesehen ist, um durch Einwirkung auf das Abdeckteil die Entlüftungsöffnung (zumindest teilweise) freizugeben. Alternativ kann die Entlüftungsöffnung ursprünglich freiliegen und durch den Betätigungsmechanismus eine derartige Einwirkung auf das Abdeckteil erfolgen, dass die Entlüftungsöffnung (zumindest teilweise) verschlossen wird. Auch ist es möglich, dass das Abdeckteil die Entlüftungsöffnung anfänglich teilweise überdeckt und durch die Einwirkung des aufblasbaren Elementes der Überdeckungsgrad geändert wird.

Ein Airbagmodul der vorgenannten Art ist aus der DE 10 2005 039 418 A1 und der WO 2009/034752 A1 bekannt.

Eine Schwierigkeit bei einem solchen Airbagmodul besteht in der geeigneten Fixierung des aufblasbaren Elementes, welches zur Steuerung des Austrittsquerschnitts der Entlüftungsöffnung dient.

Der Erfindung liegt das Problem zugrunde, ein Airbagmodul der eingangs genannten Art zu schaffen, das eine montagefreundliche und zuverlässige Anordnung und Fixierung des aufblasbaren Elementes ermöglicht.

Dieses Problem wird erfindungsgemäß durch die Schaffung eines Airbagmoduls mit den Merkmalen des Anspruchs 1 gelöst.

Danach ist die Gasquelle des Betätigungsmechanismus von dem Gasgenerator zum Aufblasen des Gassackes verschieden und das aufblasbare Element ist in der Umgebung der Gasquelle an einer Modulkomponente befestigt, die der Festlegung und/oder der Aufnahme des Gassackes an bzw. in dem Airbagmodul dient.

Hierdurch kann zur Fixierung bzw. Befestigung des aufblasbaren Elementes an seinem gasquellenseitigen Endabschnitt wesentlich auf ohnehin vorhandene Modulkomponenten zurückgegriffen werden, nämlich solche, die zur Festlegung und/oder Aufnahme des Gassackes ohnehin erforderlich sind.

Die vermittels des aufblasbaren Elementes und eines Abdeckteiles hinsichtlich ihres Austrittsquerschnittes variierbare Entlüftungsöffnung kann dabei insbesondere am Gassack selbst vorgesehen sein; es können jedoch auch an anderer Stelle des Airbagmodules angeordnete Entlüftungsöffnungen mit der erfindungsgemäßen Anordnung gesteuert werden, etwa eine im Modulgehäuse vorgesehene Entlüftungsöffnung.

Das aufblasbare Element kann einen Gaskanal bilden, der sich von der Gasquelle zu dem Abdeckteil erstreckt, welches der Entlüftungsöffnung zugeordnet ist.

Im Bereich seines gasquellenseitigen Endabschnittes kann das aufblasbare Element in der Umgebung der Gasquelle an einer Modulkomponente des Airbagmoduls befestigt sein, zum Beispiel mittels mindestens eines hierfür vorgesehenen, zusätzlichen Befestigungselementes, und zwar insbesondere an einer Modulkomponente, die beim Aufblasen des Gassackes ihre Position im Airbagmodul nicht substantiell ändert. Das heißt, es handelt sich um eine Modulkomponente, die beim Aufblasen des Gassackes, so dass dieser sich in Richtung eines zu schützenden Fahrzeuginsassen ausdehnt bzw. entfaltet, nicht gemeinsam mit dem sich ausdehnenden bzw. entfaltenden Gassack bewegt wird.

Gemäß einer Ausführungsform der Erfindung ist die besagte Modulkomponente im Inneren des Gassackes angeordnet.

Insbesondere (aber nicht ausschließlich) in diesem Fall kann die Modulkomponente beispielsweise durch ein Halteteil gebildet werden, das der klemmenden Fixierung des Gassackes im Bereich seiner Einblasöffnung am Airbagmodul dient. Konkret kann es sich bei der Modulkomponente beispielsweise um einen Generatorträger für einen Gasgenerator, um einen Diffusor zum Verteilen eines aus dem Gasgenerator austretenden Gasstromes oder um einen neben dem Gasgenerator verlaufenden Haltering handeln, wobei durchaus auch eine Komponente mit Doppelfunktion vorgesehen sein kann, also etwa ein Diffusor, an dem gleichzeitig ein Haltering angeformt ist bzw. der gleichzeitig als Generatorträger dient.

Nach einer anderen Ausführungsform ist das aufblasbare Element an einer Modulkomponente festgelegt, in der der Gassack vor dem Aufblasen angeordnet ist bzw. die an den Gassack angrenzt. Hierbei kann es sich zum Beispiel um ein Modulgehäuse oder um einen Generatorträger handeln.

Gemäß einer Weiterbildung der Erfindung ist das mindestens eine Befestigungselement, das zur Befestigung des aufblasbaren Elementes an einer Modulkomponente vorgesehen ist, mit einer Durchtrittsöffnung versehen, durch die hindurch die aus der Gasquelle austretenden Gase in das aufblasbare Element strömen können.

Die Durchtrittsöffnung kann mit der Gasquelle über eine Dichtung in Verbindung stehen, um die Verbindung zwischen der Gasquelle und dem aufblasbaren Element (über die Durchtrittsöffnung des Befestigungselementes) abzudichten.

Weiterhin kann die Durchtrittsöffnung des Befestigungselementes zur Umlenkung des hindurchtretenden Gasstromes ausgebildet sein, so dass der Gasstrom entlang einer anderen Richtung aus der Durchtrittsöffnung heraus in das aufblasbare Element eintreten kann, als er aus der Gasquelle in die Durchtrittsöffnung eingeströmt.

Gemäß einer weiteren Ausführungsform der Erfindung kann das aufblasbare Element zwischen zwei Modulkomponenten klemmend befestigt sein, die der Festlegung des Gassackes an dem Airbagmodul und/oder der Aufnahme des Gassackes in dem Airbagmodul dienen.

Die Gasquelle kann einerseits fest am Airbagmodul angebracht sein oder, zum Beispiel durch Einspannen eines zugehörigen Anschlusskabels, mit dem die Gasquelle aktivierbar ist, (beweglich) am Airbagmodul gehalten werden.

Die Entlüftungsöffnung, durch die hindurch Gas aus dem Gassack in die Umgebung austritt, wenn diese nicht mit dem zugeordneten Abdeckteil überdeckt ist, kann durch ein oder mehrere Löcher in der Hülle (Wand) des Gassackes gebildet werden.

Bei Ausbildung der Entlüftungsöffnung als Lochgruppe, bestehend aus einer Mehrzahl Löcher in der Hülle bzw. Wand des Gassackes, welche durch Materialbereiche, zum Beispiel in Form von Stegen, voneinander getrennt sind, lässt sich verhindern, dass das Abdeckteil unter der Wirkung eines Gasstromes durch die Entlüftungsöffnung hindurch gedrückt werden kann. Die Lochgruppe kann dabei auch durch eine Netzstruktur gebildet werden, etwa indem eine solche Netzstruktur auf einen mit einer hinreichend großen Öffnung versehenen Bereich der Hülle bzw. Wand des Gassackes aufgebracht wird, so dass sie jene Öffnung überdeckt.

Weiterhin kann die Entlüftungsöffnung durch Schlitze in der Hülle des Gassackes gebildet werden, welche aufklappbare Segmente in jener Hülle definieren, so dass Gas immer dann aus dem Gassack ausströmen kann, wenn die besagten Segmente aufgeklappt sind und hierdurch die Entlüftungsöffnung freigegeben, was wiederum in Abhängigkeit davon gesteuert werden kann, ob die aufklappbaren Segmente von einem zugeordneten Abdeckteil an einem Aufklappen gehindert werden oder nicht. Hierzu kann beispielsweise vorgesehen sein, dass die aufklappbaren Segmente (zunächst) über eine lösbare Verbindung mit dem Abdeckteil verbunden sind.

Weiter kann vorgesehen sein, dass die Entlüftungsöffnung von einer lösbaren Fixierung des Abdeckteiles an der Hülle des Gassackes umgriffen wird.

Bei dem Abdeckteil kann es sich um ein von dem aufblasbaren Element separates Teil handeln, auf welches - nach einer Aktivierung der Gasquelle - das aufblasbare Element bzw. die aus der Gasquelle in das aufblasbare Element freigesetzten Gase derart einwirken, dass es seine Lage/Position bezüglich der Entlüftungsöffnung verändert, was wiederum eine Änderung des Austrittsquerschnittes der Entlüftungsöffnung bewirkt. Hierzu kann das Abdeckteil auch als separates Teil an dem aufblasbaren Element befestigt sein. Ferner kann das Abdeckteil auch unmittelbar durch einen Abschnitt des aufblasbaren Elementes selbst gebildet werden, so dass es etwa zur Begrenzung des mit Gas befüllbaren Innenraumes des aufblasbaren Elementes beiträgt.

Das aufblasbare Element kann an seinem abdeckteilseitigen Endabschnitt fest verschlossen sein, zum Beispiel indem das aufblasbare Element an einem Endabschnitt im Bereich des Abdeckteiles durch einen zusätzlichen Verbindungsbereich verschlossen wird.

Nach einer weiteren Variante der Erfindung liegt das Abdeckteil zum Verschließen der Entlüftungsöffnung zunächst mit zwei Teilabschnitten auf der Entlüftungsöffnung auf, von denen der eine Teilabschnitt eine Durchgangsöffnung aufweist, durch die hindurch Gas aus dem Gassack und der zugehörigen Entlüftungsöffnung austreten kann, und von denen der andere Teilabschnitt die Entlüftungsöffnung gemeinsam mit der Durchgangsöffnung verschließt.

Hierbei kann ferner vorgesehen sein, dass der eine Teilabschnitt fest, d. h. dauerhaft, mit dem Gassack verbunden ist, während der andere Teilabschnitt lösbar mit dem Gassack und/oder dem ersten Teilabschnitt verbunden ist, so dass die letztgenannte Verbindung beim Befüllen des aufblasbaren Elementes mit Gas auftrennbar ist und der andere Teilabschnitt bewegt werden kann. Hierdurch lässt sich erreichen, dass der andere Teilabschnitt beim Aufblasen des aufblasbaren Elementes von der Entlüftungsöffnung und der Durchgangsöffnung weg bewegt wird und diese für den Austritt von Gas aus dem Gassack freigibt. Die Bewegung des anderen Teilabschnittes des aufblasbaren Elementes kann dabei insbesondere eine Klappbewegung sein, so dass der besagte Teilabschnitt von der Entlüftungsöffnung und der Durchgangsöffnung weg geklappt wird.

So kann vorgesehen sein,
- dass der andere Teilabschnitt derart umklappbar ist, dass er beim Aufblasen des aufblasbaren Elementes nicht in die Entlüftungsöffnung hinein bewegt wird,
- dass der andere Teilabschnitt um eine Verbindung klappbar ist, über die der eine Teilabschnitt mit dem Gassack verbunden ist, und/oder
- dass die lösbare Verbindung des anderen Teilabschnittes einen mit Gas befüllbaren Bereich des aufblasbaren Elementes begrenzt, so dass beim Befüllen des aufblasbaren Elementes mit Gas die lösbare Verbindung durch die zunehmende Ausdehnung des mit Gas befüllbaren Bereiches belastet wird.

Mit dieser Erfindungsvariante lässt sich insbesondere erreichen, dass die Entlüftungsöffnung für den Austritt von Gas aus dem Gassack freigegeben werden kann, ohne das Material des Abdeckteiles in oder durch die Entlüftungsöffnung gedrückt werden müsste.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung eines Airbagmoduls mit teilweise befülltem Gassack;
- Fig. 2: das Airbagmodul aus Figur 1 nach Freigabe einer Entlüftungsöffnung des Gassackes;
- Fig. 3: eine erste Abwandlung des Ausführungsbeispieles aus Figur 1;
- Fig. 4: eine zweite Abwandlung des Ausführungsbeispieles aus Figur 1;
- Fig. 5: eine Detaildarstellung von Teilen eines Betätigungsmechanismus in Form einer pyrotechnischen Vorrichtung zur Steuerung des Austrittsquerschnittes der Entlüftungsöffnung am Gassack gemäß Fig. 1;
- Fig. 6A: eine Abwandlung der Anordnung aus Figur 5;
- Fig. 6B: die Anordnung aus Figur 6A nach einer Aktivierung der pyrotechnischen Vorrichtung;
- Fig. 7: eine zweite Abwandlung der Anordnung aus Figur 5;
- Fig. 8: eine dritte Abwandlung der Anordnung aus Figur 5;
- Fig. 9: eine vierte Abwandlung der Anordnung aus Figur 5;
- Fig. 10: eine Innenansicht eines Teilbereiches des Gassackes aus Figur 1 im Bereich einer Vorrichtung zur Steuerung des Austrittsquerschnittes einer Entlüftungsöffnung;
- Fig. 11: eine dritte Abwandlung des Airbagmodules aus Figur 1;
- Fig. 12: ein Detail des Airbagmodules aus Figur 11 im Bereich einer Vorrichtung zur Steuerung des Austrittsquerschnitts einer Entlüftungsöffnung;
- Fig. 13: eine Innenansicht eines Teilbereiches des Gassackes aus Figur 11 im Bereich der Vorrichtung zur Steuerung des Austrittsquerschnittes einer Entlüftungsöffnung;
- Fig. 14: eine vierte Abwandlung des Airbagmodules aus Figur 1;
- Fig. 15: eine Innenansicht eines Teilbereiches des Gassackes aus Figur 14 im Bereich einer Vorrichtung zur Steuerung des Austrittsquerschnittes einer Entlüftungsöffnung;
- Fig. 16: das Airbagmodul aus Figur 14 nach einem Verschließen der anfänglich offenen Entlüftungsöffnung;
- Fig. 17: eine Darstellung gemäß Figur 15 nach einem Verschließen der anfänglich offenen Entlüftungsöffnung;
- Fig. 18: eine Abwandlung des Ausführungsbeispieles aus Figur 14 im Bereich der Entlüftungsöffnung;
- Fig.19: eine Innenansicht gemäß Figur 10 in einer abgewandelten Ausführungsform;
- Fig. 20: ein Detail aus Figur 19 in einer ersten Abwandlung;
- Fig. 21: ein Detail aus Figur 19 in einer zweiten Abwandlung;
- Fig. 22: eine Darstellung gemäß Figur 5 in einer weiteren Abwandlung;
- Fig. 23: eine Innenansicht eines Gassackes im Bereich einer Vorrichtung zur Steuerung des Querschnittes einer Entlüftungsöffnung;
- Fig. 24: eine fünfte Abwandlung des Airbagmoduls aus Figur 1;
- Fig. 25: eine Innensicht eines Teilbereiches des Gassackes aus Figur 24 im Bereich einer Vorrichtung zur Steuerung des Austrittsquerschnittes einer Entlüftungsöffnung;
- Fig. 26: das Airbagmodul aus Figur 24 nach einem Öffnen der anfänglich verschlossenen Entlüftungsöffnung;
- Fig. 27: eine Darstellung nach Figur 25 nach einem Öffnen der anfänglich verschlossenen Entlüftungsöffnung;
- Fig. 28: eine Darstellung gemäß Figur 5 in einer zusätzlichen Abwandlung;
- Fig.29: eine Innenansicht gemäß Figur 10 in einer zusätzlichen abgewandelten Ausführungsform.

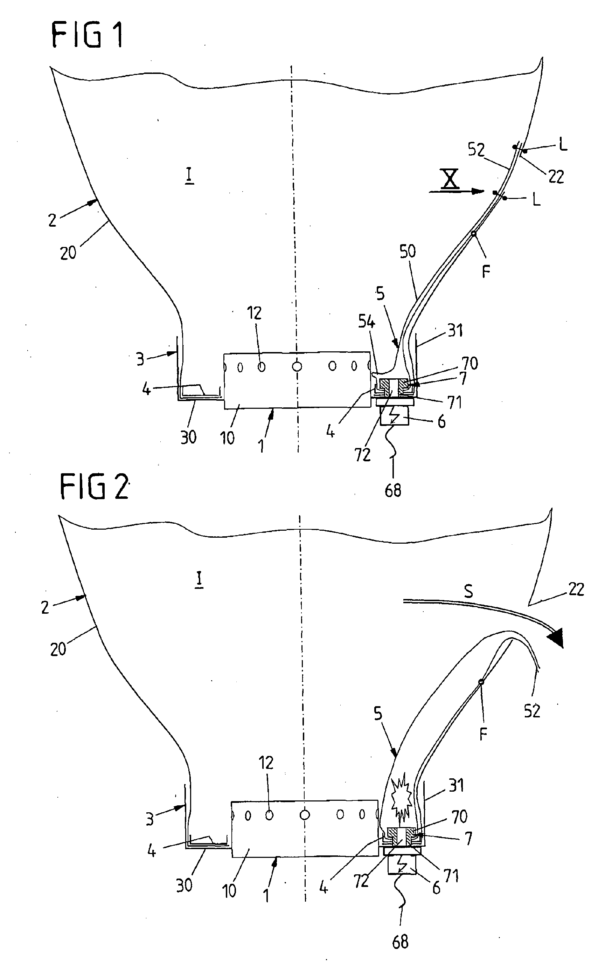

Figur 1 zeigt als wesentliche Komponenten eines Airbagmodules in schematischer Darstellung einen Gasgenerator 1 zum Aufblasen eines Gassackes 2, welcher vor dem Aufblasen in (zusammengefaltetem bzw. zusammengerafftem) Zustand in einem Modulgehäuse 3 verstaut ist. Das Airbagmodul ist dabei in Figur 1 in einem Zustand dargestellt, in dem der Gassack 2 bereits zumindest teilweise mit Gas aus dem Gasgenerator 1 befüllt und daher aus dem Modulgehäuse 3 ausgetreten ist.

Der Gasgenerator 1, welcher in bekannter Weise ein Gehäuse 10 umfasst, ist mit einem Kaltgas und/oder chemischen Substanzen zur Erzeugung eines Heißgases befüllt und mit Austrittsöffnungen 12 versehen, durch die hindurch Gas aus dem Inneren des Gasgenerators 1 austreten kann, um den Gassack 2 mit Gas zu befüllen, so dass sich dessen Hülle 20 entfaltet und der Gassack 2 zum Schutz eines Fahrzeuginsassen aus dem Modulgehäuse 3 heraus expandiert.

Der Gasgenerator 1 ragt dabei vorliegend in üblicher Weise durch eine sogenannte Einblasöffnung bzw. einen Einblasmund des Gassackes 2 in dessen Inneres I hinein, so dass aus den Austrittsöffnungen 12 des Gasgenerators 1 austretende Gase unmittelbar in das Innere I des Gassackes 2 gelangen können.

Zur Festlegung des Gassackes 2 am bzw. im Modulgehäuse 3 dienen vorliegend Haltemittel 4 in Form eines Halteringes, der den (im Ausführungsbeispiel topfförmigen) Gasgenerator 1 ringförmig umgibt und die Gassackhülle 20 im Bereich des Einblasmundes, nämlich entlang des Randes des Einblasmundes, klemmend befestigt, indem die Gassackhülle 20 entlang des Randes des Einblasmundes des Gassackes 2 zwischen jenem Haltering 4 und einem Boden 30 des Modulgehäuses 3 eingeklemmt wird. Die Elemente zur Fixierung der Haltemittel 4 am Modulgehäuse 3, welche gleichzeitig auch zur Erzeugung der Klemmkraft dienen können, sind dabei nicht mit dargestellt. Hierbei kann es sich beispielsweise um Schraub-, Niet- oder Rastelemente handeln, die außerdem zur Befestigung des Gasgenerators 1 am Modulgehäuse 3 vorgesehen sein können.

Zur Aufnahme des Gasgenerators 1 sowie des Gassackes 2 vor dem Aufblasen weist das Modulgehäuse 3 neben dem bereits erwähnten Boden 30 eine hiervon abstehende (umlaufende) seitliche Begrenzungswand 31 auf.

Der Gassack 2 ist in seiner Hülle 20 in einem Bereich, der beim Aufblasen des Gassackes außerhalb des Modulgehäuses 3 gerät, mit einer Entlüftungsöffnung 22 versehen, durch die hindurch Gas aus dem Inneren I des Gassackes 2 in die Umgebung austreten kann.

Die Entlüftungsöffnung 22 ist in dem in Figur 1 gezeigten Zustand des Airbagmodules mit (teilweise) aufgeblasenem Gassack noch durch ein Abdeckteil 52 verschlossen, welches im Ausführungsbeispiel durch einen Abschnitt, genauer einen Endabschnitt, eines aufblasbaren Elementes 5 gebildet wird. Das aufblasbare Element 5 ist hierzu mit seinem als Abdeckteil dienenden Endabschnitt 52 in der Umgebung, d. h. entlang des Randes der Entlüftungsöffnung 22 des Gassackes 2, an dessen Hülle 20 über lösbare Verbindungsmittel L, z. B. in Form mindestens einer Reißnaht, festgelegt.

Das aufblasbare Element 5 ist hier beispielhaft im Inneren I des Gassackes 2 angeordnet und weist eine (z. B. aus Gewebe bestehende) Hülle 50 auf, die mit Gas aus einer (pyrotechnischen) Gasquelle 6 befüllbar ist. Das aufblasbare Element 5 erstreckt sich (nach Art eines Gaskanales) von der Gasquelle 6 bis zu der Entlüftungsöffnung 22 derart, dass die Entlüftungsöffnung 22 von dem als Abdeckteil dienenden (End-) Abschnitt 52 des aufblasbaren Elementes 5 überdeckt ist und ein anderer Endabschnitt 54 des aufblasbaren Elementes 5 derart an die Gasquelle 6 angeschlossen ist, dass von der Gasquelle 6 freigesetztes Gas in das aufblasbare Element 5 gelangt.

Die Gasquelle 6 ist im Ausführungsbeispiel (über nicht dargestellte Befestigungsmittel) mit dem Modulgehäuse 3 verbunden, und dabei hier außerhalb des Modulgehäuses 3, z. B. unterhalb des Gehäusebodens 30, angeordnet. Sie ist über ein Anschlusskabel 68 mit einer Steuerung verbunden, die, beispielsweise sensorgesteuert, über das Anschlusskabel 68 eine pyrotechnische Ladung der Gasquelle 6 zünden kann, so dass diese Gas zum Befüllen des aufblasbaren Elementes 5 freisetzt.

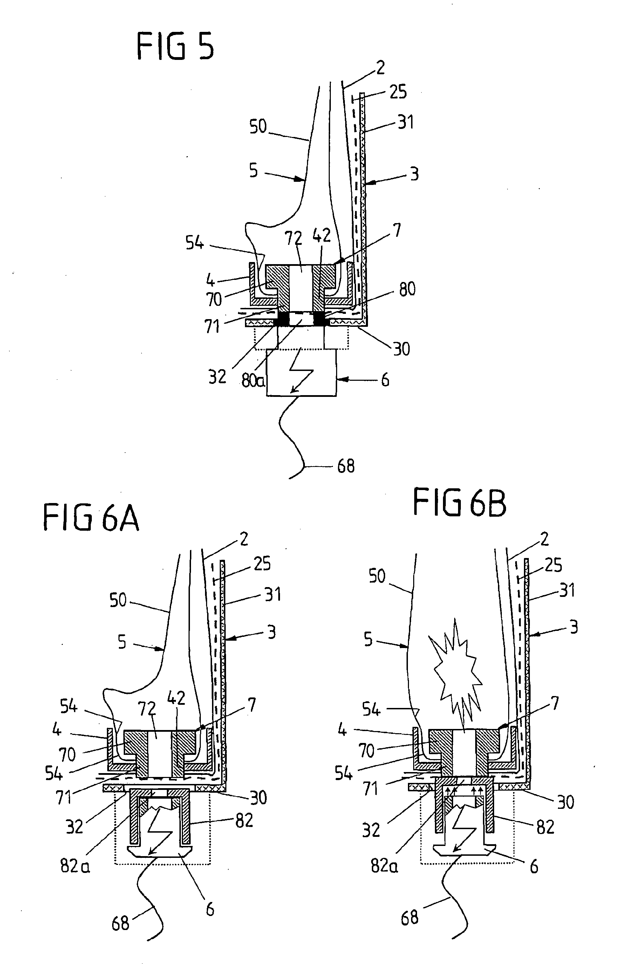

Zur Befestigung des aufblasbaren Elementes 5 (innerhalb des Modulgehäuses 3) derart, dass dieses über seinen zweiten Endabschnitt 54 mit Gas aus der Gasquelle 6 befüllbar ist, dient ein Befestigungselement 7, das innerhalb des aufblasbaren Elementes 5, genauer innerhalb des zweiten Endabschnittes 54, angeordnet ist und derart stufenförmig ausgeführt ist, dass ein erster Bereich 70 des Befestigungselementes innerhalb des aufblasbaren Elementes 5 liegt, während ein zweiter, hiervon abgesetzter Bereich 71 eine Öffnung des aufblasbaren Elementes 5 durchgreift und am Haltering 4 festgelegt ist, siehe auch Figur 5.

Eine Fixierung des Befestigungselementes 7 am Haltering 4, so dass im Ergebnis auch das aufblasbare Element hieran befestigt ist, kann beispielsweise formschlüssig erfolgen, insbesondere durch Verrasten. Hierzu kann das Befestigungselement 7 als ein (mit seinem zweiten Bereich 71) in die zugeordnete Öffnung des Halteringes 4 einrastbarer Clip ausgeführt sein.

Das Befestigungselement 7 erstreckt sich mit seinem aus dem aufblasbaren Element 5 hinausragenden und den Haltering 4 sowie zusätzlich den Gassack 2 in der Umgebung seines Einblasmundes durchgreifenden zweiten Bereich 71 bis zu der Gasquelle 6 und ist mit einer Durchtrittsöffnung 72 versehen, durch die hindurch aus der Gasquelle 6 freigesetztes Gas in das Innere des aufblasbaren Elementes 5 gelangen kann. Zusätzlich zu dem gleichzeitig der Gaseinleitung dienenden Befestigungselement 7 können auch noch weitere Befestigungsmittel zur Fixierung des aufblasbaren Elementes 5 am Haltering 4 und/oder am Modulgehäuse 3 vorgesehen sein, z. B. Niete.

Weiterhin ist im Ausführungsbeispiel eine (optionale) feste Verbindung zwischen mindestens einer Lage des aufblasbaren Elementes 5 und der Hülle 20 des Gassackes 2 beabstandet von der Entlüftungsöffnung 22 vorgesehen. Genauer liegt die permanent feste Verbindung F (entlang Erstreckungsrichtung des aufblasbaren Elementes 5) in einem Bereich zwischen der Entlüftungsöffnung 22 einerseits und der Gasquelle 6 andererseits.

Figur 2 zeigt das Modul aus Figur 1 nach einem Zünden der dem aufblasbaren Element 5 zugeordneten Gasquelle 6, so dass ersteres mit Gas befüllt wurde. Durch den Druck und gegebenenfalls die Temperatur der in das aufblasbare Element 5 geleiteten Gase werden die lösbaren Verbindungen L zwischen dem aufblasbaren Element 5 und dem Gassack 2 zerstört, so dass keine Verbindung mehr zwischen den Randbereichen der Entlüftungsöffnung 22 und dem durch einen Endabschnitt 52 des aufblasbaren Elementes 5 gebildeten Abdeckteil besteht. Hierdurch kann jener als Abdeckteil dienende Endabschnitt 52 aufgrund des im Gassack 2 herrschenden Innendruckes durch die Entlüftungsöffnung 22 hindurchgedrückt werden, so dass diese nicht mehr verschlossen ist und ein Gasstrom S aus dem Inneren I des Gassackes 2 durch die Entlüftungsöffnung 22 hindurch austreten kann, um den Innendruck des Gassackes - wie bei Auslösung der Gasquelle 6 gewünscht - zu reduzieren.

Die Gasquelle 6 und das aufblasbare Element 5 bilden somit einen Betätigungsmechanismus zur Betätigung des Abdeckteiles 52.

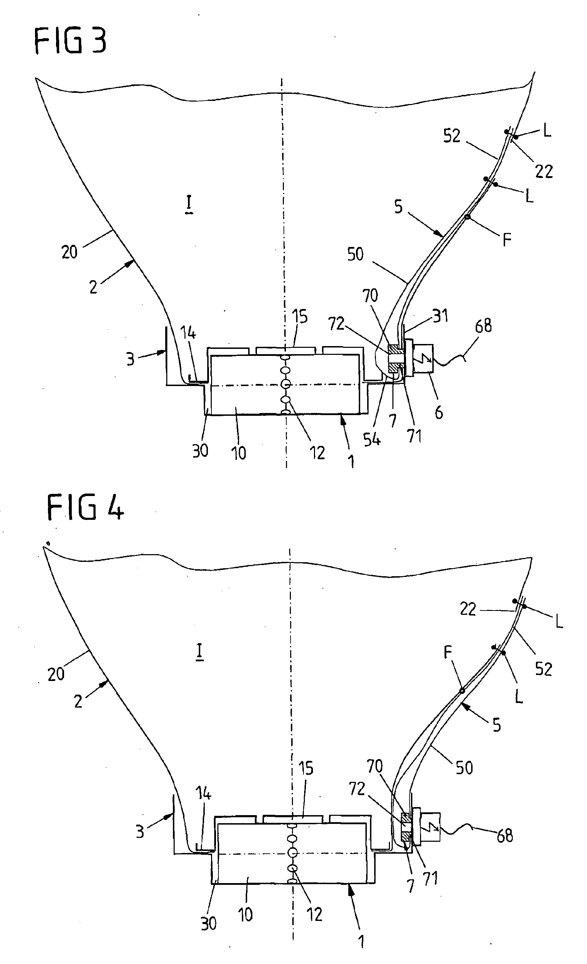

Figur 3 zeigt eine erste Abwandlung des Airbagmodules aus Figur 1, wobei ein Unterschied darin besteht, dass dem Gasgenerator 1 ein Diffusor 15, zugeordnet ist, der ggf. auch als Generatorträger dienen kann und der die aus dem Gasgenerator 1 durch die Austrittsöffnungen 12 austretenden Gase in das Innere I des Gassackes 2 hinein verteilt. Dabei ist der Haltering 14, über den der Gassack 2 im Bereich des Randes seiner Einblasöffnung innerhalb des Modulgehäuses 3 fixiert wird, hier in Form eines Flansches einteilig am Diffusor 15 (bzw. ggf. Generatorträger) angeformt. Weiterhin dient der Diffusor 15 zur Fixierung des Gasgenerators 1 am bzw. im Modulgehäuse 3.

Ein weiterer Unterschied besteht darin, dass das aufblasbare Element 5 hier im Bereich seines gasquellenseitigen Endabschnittes 54 über das Befestigungselement 7 am Modulgehäuse 3, genauer an dessen seitlicher (umlaufender) Begrenzungswand 31 festgelegt ist, indem, ähnlich der Anordnung aus Figur 1, ein stufenförmig abgesetzter zweiter Bereich 71 des Befestigungselementes 7 eine Öffnung in der Hülle 50 des aufblasbaren Elementes 5 durchgreift und in eine Öffnung im Modulgehäuse 3, genauer in dessen Begrenzungswand 31, eingreift und dort, z. B. durch Verrasten, festgelegt ist.

Dabei kann sich auch beim Ausführungsbeispiel der Figur 3, wie im Fall der Figur 1, das Befestigungselement 7 weiterhin durch eine Öffnung in der Hülle 20 des Gassackes 2 hindurch erstrecken.

Die Gasquelle 6 liegt im Ausführungsbeispiel der Figur 3 wiederum außerhalb des Modulgehäuses 3, jedoch in diesem Fall neben dessen seitlicher Begrenzungswand 31.

Die Fixierung des aufblasbaren Elementes 5 über das Befestigungselement 7 am Modulgehäuse 3 kann auch an anderer Stelle, z. B. im Bereich des Gehäusebodens 30, erfolgen. Vorteilhaft ist eine Fixierung in solchen Bereichen, die bei einer Entfaltung des Gassackes 2 vergleichsweise geringen Zugbelastungen durch diesen ausgesetzt sind.

Figur 4 zeigt eine weitere Abwandlung des Ausführungsbeispieles aus Figur 1, und zwar aufbauend auf der Anordnung aus Figur 3, wobei der wesentliche Unterschied sowohl zur Figur 1 als auch zur Figur 3 darin besteht, dass hier das aufblasbare Element 5 außerhalb des Gassackes 2 angeordnet ist, sich nämlich als Gaskanal entlang einer Außenseite der Hülle 20 des Gassackes 2 erstreckt (anstelle einer Erstreckung als Gaskanal entlang einer Innenseite der Hülle 20 im Fall der Figuren 1 und 3).

In Figur 5 ist in größerem Detail die Fixierung des aufblasbaren Elementes 5 im Bereich seines gasquellenseitigen Endabschnittes 54 am Haltering 4 erkennbar, und zwar beispielhaft für ein Ausführungsbeispiel gemäß Figur 1.

Zusätzlich zu den bereits anhand Figur 1 beschriebenen Elementen, die in Figur 5 ebenfalls gezeigt und mit entsprechenden Bezugszeichen versehen sind, geht Figur 5 von einer Modulausführung aus, bei der der Gassack 2 im nicht expandierten Zustand von einer Folie 25 umhüllt ist. Dies ermöglicht die Erzeugung eines besonders kleinvolumigen Gassackpaketes durch Evakuierung des von der Hülle 25 eingeschlossenen Raumes nach dem Zusammenstauchen bzw. Zusammenfalten und Verpacken des Gassackes 2 zu einem Gassackpaket, wobei der Unterdruck durch die den Gassack 2 umhüllende Folie 25 aufrechterhalten werden kann. Die Folie 25 wird bei Aktivierung des Gasgenerators 1 und der damit einhergehenden Entfaltung des Gassackes 2 zerstört.

Weiterhin umfasst die Anordnung aus Figur 5 ,im Unterschied zu Figur 1, ein (elastisches) Dichtelement 80, das (innerhalb einer Öffnung 32 des Modulgehäuses 3 bzw. von dessen Boden 30) zwischen dem Befestigungselement 7 und der Gasquelle 6 angeordnet ist und eine Durchtrittsöffnung 80a aufweist, durch die hindurch aus der Gasquelle 6 freigesetztes Gas (nach einem Durchströmen der weiteren Durchtrittsöffnung 72 im Befestigungselement 7) in das aufblasbare Element 5 gelangen kann. Über dieses zusätzliche Dichtelement 80 wird die Abdichtung der gasleitenden Verbindung 72, 80a zwischen der Gasquelle 6 und dem aufblasbaren Element 5 optimiert, indem etwaige Fertigungstoleranzen der einzelnen Modulkomponenten ausgeglichen werden können.

Figur 6A zeigt eine erste Abwandlung der Anordnung aus Figur 5, wobei hier die Gasquelle 6 von einem Dichtelement 82 teilweise umgeben ist, welches in Gasaustrittsrichtung der Gase aus der Gasquelle 6 beweglich ist. Die Außenwand der Gasquelle 6 dient dabei gleichzeitig als Führung für das die Gasquelle 6 abschnittsweise ringförmig umschließende Dichtelement 82.

Das Dichtelement 82 ragt in eine Öffnung 32 des Modulgehäuses 3 bzw. genauer von dessen Boden 30 hinein und ist dort mit einer Durchtrittsöffnung 82a für die von der Gasquelle 6 freigesetzten Gase versehen, welche einen kleineren Querschnitt aufweist als die Gasaustrittsöffnung der Gasquelle 6.

Durch den reduzierten Querschnitt der Durchtrittsöffnung 82a des Dichtelementes 82 haben die bei einer Aktivierung der Gasquelle 6, vergleiche Figur 6B, freigesetzten Gase den Effekt, das Dichtelement 82, welches zunächst noch von dem Befestigungselement 7 beabstandet ist, gegen das Befestigungselement 7 zu drücken und hierdurch die beiden Elemente 7, 82 dichtend aneinanderzulegen. Auch hierdurch können, entsprechend der anhand Figur 5 erläuterten Anordnung, Fertigungstoleranzen der zu verbindenden Modulkomponenten ausgeglichen werden. Im Unterschied zur Anordnung aus Figur 5 wird aber beim Ausführungsbeispiel der Figuren 6A und 6B die Abdichtung der gasleitenden Verbindung 72, 82a zwischen der Gasquelle 6 und dem aufblasbaren Element 5 erst nach Aktivierung der Gasquelle 6 und einer damit verbundenen Verschiebung des Dichtelementes 82, wie anhand des Überganges von Figur 6A zu 6B dargestellt, erreicht.

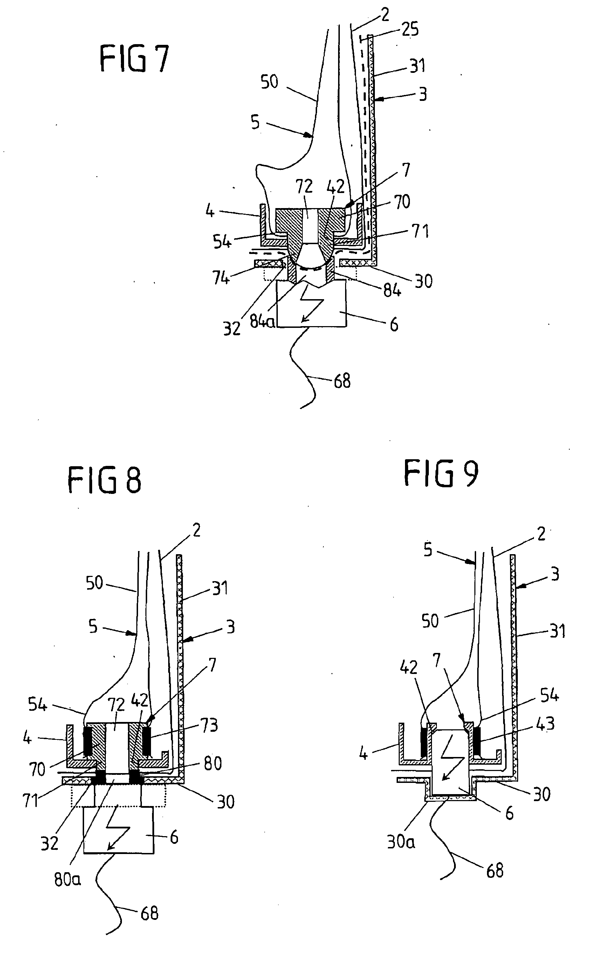

Beim Ausführungsbeispiel der Figur 7 ist zur Herstellung einer abgedichteten gasleitenden Verbindung zwischen der Gasquelle 6 und dem aufblasbaren Element 5 über das Befestigungselement 7 vorgesehen, an einem der Gasquelle 6 zugewandten Endabschnitt 74 des Befestigungselementes 7 eine Zentrierfläche, z. B. in Form einer abgeschrägten bzw. gekrümmten Fläche, vorzusehen, der gasquellenseitig ein entsprechendes Gegenstück 84, wiederum versehen mit einer Gasdurchtrittsöffnung 84a, zugeordnet ist, so dass das Befestigungselement 7 dichtend in jenes gasquellenseitige Gegenstück 84, welches auch als elastische Dichtung ausgeführt sein kann, eingreifen kann. Zwischen dem Befestigungselement 7 und dem gasquellenseitigen Gegenstück 84 kann dabei auch die zur Umhüllung des Gassackes 2 dienende Folie 25 verlaufen.

Die Zentriermittel 74, 84 aus dem Ausführungsbeispiel der Figur 7 können neben einer Abdichtung der gasleitenden Verbindung zwischen Gasquelle 6 und aufblasbarem Element 5 auch die Funktion haben, die Modulkomponenten bei der Montage (quer zur Hauptentfaltungsrichtung des Gassackes 2) auszurichten.

Gemäß dem Ausführungsbeispiel der Figur 8, welches eine dritte Abwandlung der Anordnung aus Figur 5 zeigt, ist das aufblasbare Element 5 an seinem gasquellenseitigen Endabschnitt 54 offen. D.h., dort ist - im Gegensatz zur Ausführungen der Figuren 5 bis 7 - keine (passgenaue) Öffnung vorgesehen, die das Befestigungselement 7 mit seinem stufenförmig abgesetzten Bereich 71 zu durchgreifen hätte. Dies bedeutet auch, dass das Befestigungselement 7 nicht mehr vor dem Verschließen des aufblasbaren Elementes 5, z. B. durch Vernähen entsprechender Gewebeteile, innerhalb des aufblasbaren Elementes zu positionieren ist.

Vielmehr kann beim Ausführungsbeispiel der Figur 8 eine Verbindung zwischen dem aufblasbaren Element 5 und dem Befestigungselement 7 gegebenenfalls erst bei der Modulmontage erfolgen, indem das aufblasbare Element 5 mit seinem offenen gasquellenseitigen Endabschnitt 54 über das Befestigungselement 7 gestülpt wird.

Zur Fixierung des gasquellenseitigen Endabschnittes 54 des aufblasbaren Elementes 5 am Befestigungselement 7 dienen dabei geeignete Fixiermittel, im Ausführungsbeispiel in Form einer Schlauchschelle 73.

Im Übrigen stimmt das Ausführungsbeispiel der Figur 8 mit der Anordnung aus Figur 5 überein.

Beim Ausführungsbeispiel der Figur 9 ist das Befestigungselement 7 als ein integraler Bestandteil des Halterings 4 (bzw. des Diffusors 15 im Fall der Anordnung aus Figur 3) einteilig an diesem angeformt, z. B. angegossen im Falle eines Gussteiles oder mittels eines Stempels geformt bei einem Tiefziehteil aus Blech, oder auch angeschweißt.

Die Festlegung der Gasquelle 6, welche hier innerhalb des Modulgehäuses 3 liegt, erfolgt beim Ausführungsbeispiel der Figur 9 in der Weise, dass diese in eine Aufnahme 30a des Modulgehäuses 3 bzw. genauer des Gehäusebodens 30 eingefügt wird und so zwischen dem Modulgehäuse 3 und dem Befestigungselement 7 eingeklemmt werden kann, wobei die Gasquelle 6 zumindest teilweise von dem Befestigungselement 7 umgeben wird.

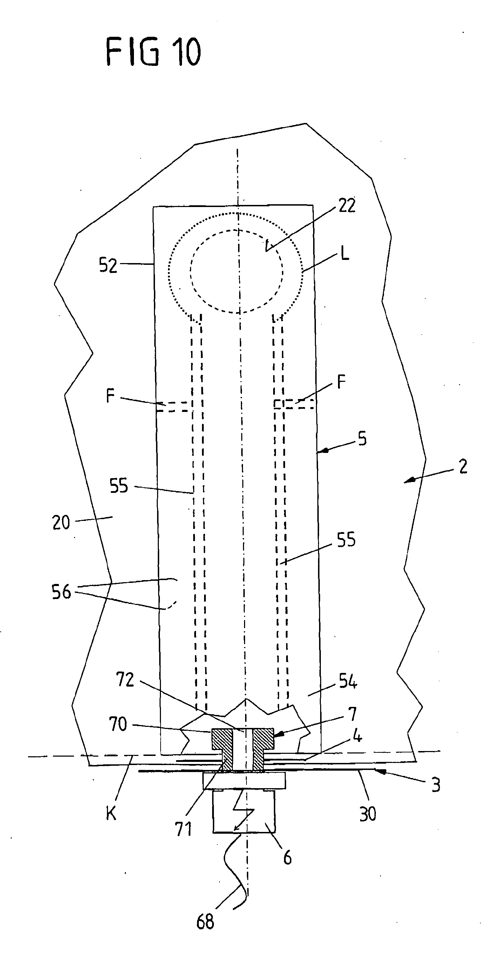

Figur 10 zeigt eine Innenansicht des Gassackes 2 aus Figur 1 im Bereich des aufblasbaren Elementes 5, anhand derer insbesondere die Ausgestaltung des aufblasbaren Elementes 5 sowie dessen Verbindung mit der Hülle 20 des Gassackes 2 erläutert werden soll.

Das aufblasbare Element 5 bzw. dessen Hülle 50 ist hier durch einen einteiligen Zuschnitt, z. B. aus einem Gewebematerial, gebildet, also insbesondere einem Material, das auch für die Herstellung der Hülle 20 des Gassackes 2 verwendet werden kann. Der Zuschnitt ist entlang einer Symmetrie- bzw. Klapplinie K einmal umgeklappt und die beiden aufeinanderliegenden Segmente 56 des Zuschnittes sind zur Bildung eines kanal- bzw. schlauchförmigen aufblasbaren Elementes 5 (Gaskanal) entlang ihrer seitlichen Randbereiche an Verbindungslinien 55 fest miteinander verbunden. Die Verbindung kann beispielsweise durch Nähen, Kleben oder Verschweißen erfolgen. Eine Verbindung zur Hülle 20 des Gassackes 2 besteht an diesen Stellen bevorzugt nicht.

An dem gasquellenseitigen Endabschnitt 54 weist der Zuschnitt eine Öffnung auf, die von einem stufenförmig abgesetzten Bereich 71 des hierin angeordneten Befestigungselementes 7 durchgriffen wird, wie anhand Figur 1 bereits beschrieben.

Mit seinem entlüftungsöffnungsseitigen Endabschnitt 52 ist der Zuschnitt über lösbare Verbindungsmittel L, z. B. in Form einer Reißnaht, an der Hülle 20 des Gassackes 2 fixiert, wobei die lösbaren Verbindungsmittel L im Ausführungsbeispiel die Entlüftungsöffnung 22 ringförmig umgreifen.

Zwischen dem gasquellenseitigen Endabschnitt 54 und dem entlüftungsöffnungsseitigen Endabschnitt 52 ist das aufblasbare Element 5 außerdem über feste, permanente Verbindungsmittel F an der Hülle 20 des Gassackes 2 dauerhaft fixiert.

Alternativ zu dem in Figur 10 gezeigten einteiligen Zuschnitt, welcher um eine quer (bezüglich der Längserstreckung des aufblasbaren Elementes 5) verlaufende Symmetrie- bzw. Klapplinie K umklappbar ist, kann auch ein einteiliger Zuschnitt verwendet werden, der um eine in Erstreckungsrichtung des aufblasbaren Elementes (also quer zur Klapplinie K der Figur 10) verlaufende Symmetrie- bzw. Klapplinie umzuklappen ist. In diesem Fall verliefe die Symmetrie- bzw. Klapplinie im Wesentlichen entlang der Strömungsrichtung der aus der Gasquelle 6 austretenden Gase. Bei dieser Ausführungsform wird das aufblasbare Element 5 zusätzlich an seinem gasquellenseitigen Ende über geeignete Verbindungsmittel verschlossen, während - im Vergleich zur Anordnung aus Figur 10 - nur eine der längserstreckten Verbindungslinien 55 erforderlich ist.

Eine weitere Möglichkeit besteht in der Herstellung des aufblasbaren Elementes aus zwei separaten Zuschnitten, die entlang ihrer Randbereiche, insbesondere dreier Randbereiche, fest miteinander verbunden werden.

Es sei darauf hingewiesen, dass unterschiedliche Merkmale der vorstehend beschriebenen Ausführungsbeispiele miteinander kombinierbar sind und dass die dort jeweils beispielhaft gezeigte Modulart (in Form eines Fahrer- bzw. Beifahrerairbagmoduls) nicht einschränkend zu verstehen ist, sondern die entsprechenden Anordnungen auch auf sonstige Airbagmodule anwendbar sind.

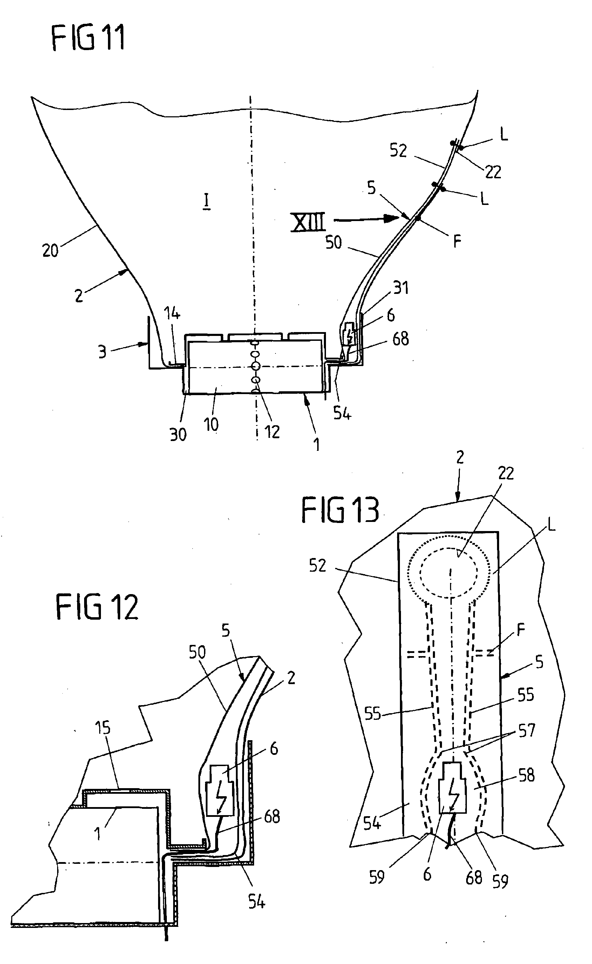

Figur 11 zeigt eine Abwandlung des Ausführungsbeispieles aus Figur 3, jedoch mit einem an seinem gasquellenseitigen Endabschnitt 54 offenen aufblasbaren Element 5, wie etwa in den Figuren 8 und 9 gezeigt. Dabei ist der offene gasquellenseitige Endabschnitt 54 des aufblasbaren Elementes 5 zwischen einem als Haltering 14 ausgebildeten Randabschnitt (Flansch) eines Diffusors 15 und dem Boden 30 eines Modulgehäuses 3 (oder gegebenenfalls auch eines Generatorträgers) eingespannt (eingeklemmt) und wird dadurch gasdicht verschlossen, wie insbesondere auch anhand der vergrößerten Detaildarstellung der Figur 12 erkennbar.

Im Gegensatz zu den vorhergehenden Ausführungsbeispielen ist bei der Anordnung der Figuren 11 und 12 die dem aufblasbaren Element 5 zugeordnete Gasquelle 6 nicht mehr direkt über ein Befestigungselement an einer Komponente des Airbagmoduls, wie z. B. einem Haltering, dem Modulgehäuse oder einem Generatorträger festgelegt, sondern vielmehr im Wesentlichen frei beweglich innerhalb des aufblasbaren Elementes 5 angeordnet. Zur Halterung der Gasquelle 6 dient in diesem Fall deren elektrische Verbindungsleitung 68, über die die Gasquelle zur Aktivierung mit einem Steuergerät in Verbindung steht. Diese Leitung 68 ist im Ausführungsbeispiel zusammen mit dem offenen, gasquellenseitigen Endabschnitt 54 des aufblasbaren Elementes 5 zwischen einem Haltering 14 und dem Gehäuseboden 30 eingeklemmt. Die Verbindungsleitung 68 ist dabei gleichzeitig aus dem offenen Endabschnitt 54 des aufblasbaren Elementes 5 herausgeführt.

Figur 13 zeigt eine Innenansicht des Gassackes 2 aus Figur 11 im Bereich des aufblasbaren Elementes 5, entsprechend der Darstellung gemäß Figur 10. Hinsichtlich mit Figur 10 übereinstimmender Ausgestaltungen der Anordnung aus Figur 13 wird auf die Erläuterungen zur Figur 10 verwiesen.

Gemäß Figur 13 besteht das aufblasbare Element 5 aus zwei Zuschnitten 56, die entlang ihrer Längsseiten an (leicht geneigt zueinander verlaufenden) Verbindungslinien 55 (fest) miteinander verbunden sind, so dass hierzwischen ein (schlauchförmiger) Gaskanal gebildet wird, der die Gasquelle 6 mit dem entlüftungsöffnungsseitigen Endabschnitt 52 (Abdeckteil) verbindet.

An dem gasquellenseitigen Endabschnitt 54 des aufblasbaren Elementes 5 verlaufen die Verbindungslinien derart, dass sie zwei in Erstreckungsrichtung des aufblasbaren Elementes 5 voneinander beabstandete Verengungen 57, 59 (Einschnürungen) definieren, zwischen denen ein verbreiterter Bereich 58 des aufblasbaren Elementes liegt. Hierin ist die Gasquelle 6 verliersicher angeordnet, indem die Einschnürungen 57, 59 derart ausgestaltet sind, dass sie ein Herausrutschen der Gasquelle 6 nicht erlauben. Mit anderen Worten ausgedrückt, ist die Gasquelle 6 in dem verbreiterten Bereich 58 am gasquellenseitigen Endabschnitt 54 des aufblasbaren Elementes 5 gefangen.

Zur Montage wird die Gasquelle 6 durch die endseitige Einschnürung 59 hindurchgequetscht, so dass sie in den erweiterten Bereich 58 eingeführt werden kann. Die andere Einschnürung 57 ist so ausgeführt, dass die Gasquelle 6 nicht durch diese hindurch weiter in das aufblasbare Element 5 eindringen kann, so dass jene Einschnürung 57 nach Art eines Endanschlages wirkt.

Weiterhin kann durch die Dimensionierung der inneren Einschnürung 57, durch die das von der Gasquelle 6 freigesetzte Gas hindurch tritt, wenn es in das aufblasbare Element 5 strömt, gezielt die Strömungsgeschwindigkeit der aus der Gasquelle 6 austretenden Gase beeinflusst werden, was für die angestrebte Zerstörung der lösbaren Fixierung L des aufblasbaren Elementes 5 am Gassack 2 von Bedeutung ist.

Auch beim Ausführungsbeispiel der Figuren 11 bis 13 kann das aufblasbare Element 5 alternativ außerhalb des Gassackes 2 angeordnet sein.

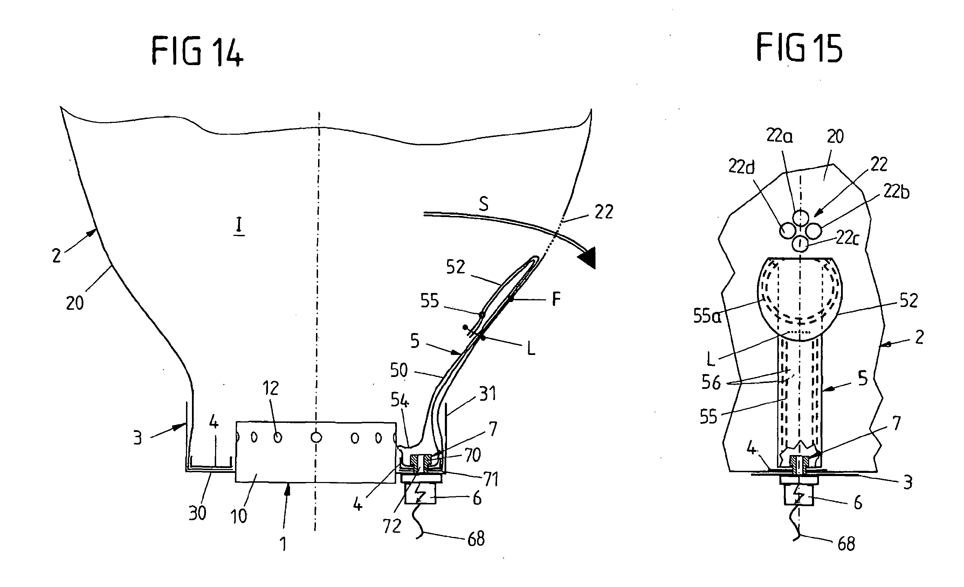

In den Figuren 14 bis 15 ist eine Abwandlung des Ausführungsbeispieles aus den Figuren 1 und 10 dargestellt, gemäß der die Entlüftungsöffnung 22 anfänglich, d. h. vor einem Befüllen des aufblasbaren Elementes 5 mittels der Gasquelle 6, offensteht und einen Gasstrom S vom Inneren I des Gassackes 2 nach außen ermöglicht.

Gemäß diesem Ausführungsbeispiel ist also der Gassack 2 bereits in seinem Ausgangszustand hinsichtlich des Gesamtabströmquerschnittes seiner Entlüftungsöffnungen (einschließlich möglicher zusätzlicher permanent offener Entlüftungsöffnungen) auf eine Crash-Situation hin ausgelegt, bei der von Anfang an ein maximales Abströmen von Gas aus dem Gassack 2 erforderlich oder zweckmäßig ist. Solche Konstellationen können z. B. dann vorliegen, wenn sich der zu schützende Insasse sehr dicht vor dem Airbagmodul befindet (so genannte oop-Situation) oder wenn die Gewichtskraft des Insassen als zu gering erkannt wird, der im Gassack herrschenden Innendruck also schnell abgebaut werden muss. Für derartige, durch Sensoren detektierbare Situationen bietet die vorliegende Ausführung Zeitvorteile, da keine Mechanismen betätigt werden müssen, bevor die Entlüftungsöffnung 22 für das Abströmen von Gas offensteht.

Selbstverständlich können an einem Gassack permanent offene Entlüftungsöffnungen sowie hinsichtlich ihres Austrittsquerschnittes gesteuerte Entlüftungsöffnungen, und zwar sowohl ursprünglich geschlossene Entlüftungsöffnungen als auch ursprünglich offene Entlüftungsöffnungen sowie gegebenenfalls teilüberdeckte Entlüftungsöffnungen, geeignet miteinander kombiniert werden.

Weiterhin kann ein zusätzlicher Verbindungsbereich 55a zwischen den beiden einander gegenüber liegenden Lagen 56 des aufblasbaren Elementes 5 vorgesehen sein, der zwischen den beiden Verbindungslinien 55 an den seitlichen Randbereichen verläuft und so das aufblasbare Element 5 auch an seinem entlüftungsöffnungsseitigen Endabschnitt 52 fest verschließt.

Vorliegend ist der als Abdeckteil dienende entlüftungsöffnungsseitige Endabschnitt 52 des aufblasbaren Elementes 5 einmal zurückgeschlagen, so dass er die Entlüftungsöffnung 22 nicht überdeckt, sondern vielmehr auf einem Teilabschnitt des aufblasbaren Elementes 5 selbst liegt. Alternativ kann der besagte Endabschnitt 52 des aufblasbaren Elementes 5 z.B. auch so umgeschlagen werden, dass er außerhalb der Entlüftungsöffnung 22 unmittelbar an der Innenseite des Gassackes 2 bzw. genauer der Gassackhülle 20 anliegt. In der umgeschlagenen Lage, in der die Entlüftungsöffnung 22 freiliegt, ist der entlüftungsöffnungsseitige Endabschnitt 52 des aufblasbaren Elementes 5 mittels einer lösbaren Fixierung L, z. B. in Form einer Reißnaht, an der Hülle 20 des Gassackes 2, bzw. am aufblasbaren Element 5 selbst, fixiert.

Die Faltkante, um die der als Abdeckteil dienende Endabschnitt 52 des aufblasbaren Elementes 5 umgeschlagen ist, liegt dabei unmittelbar benachbart zu der Entlüftungsöffnung 22.

Weiterhin ist die Entlüftungsöffnung 22 hier als eine Lochgruppe mit einer Mehrzahl Entlüftungslöchern 22a, 22b, 22c, 22d ausgebildet, zwischen denen jeweils Materialbereiche (Gewebebereiche) der Gassackhülle, z. B. in Form von Stegen, liegen. Hierdurch wird verhindert, dass nach dem durch das Aktivieren der Gasquelle 6 bedingten Befüllen des aufblasbaren Elementes 5 und dem damit einhergehenden Aufreißen der lösbaren Fixierung L sowie dem folgenden Umschlagen des als Abdeckteil dienenden Endabschnittes 52 des aufblasbaren Elementes 5 dieses durch die Entlüftungsöffnung 22 gedrückt und Letztere wieder geöffnet wird. Die die Entlüftungsöffnung 22 bildende Lochgruppe 22a, 22b, 22c, 22d kann beispielsweise durch das Einbringen entsprechender Löcher in die Gassackhülle 20 erzeugt werden. Alternativ ist aber auch möglich, die Lochgruppe als separates Element an der Gassackhülle zu befestigen, so dass sie eine Öffnung der Gassackhülle überdeckt. Dabei kann die Lochgruppe auch durch ein netzartiges Material (Gewebe) mit definierter Maschenweite bestehen.

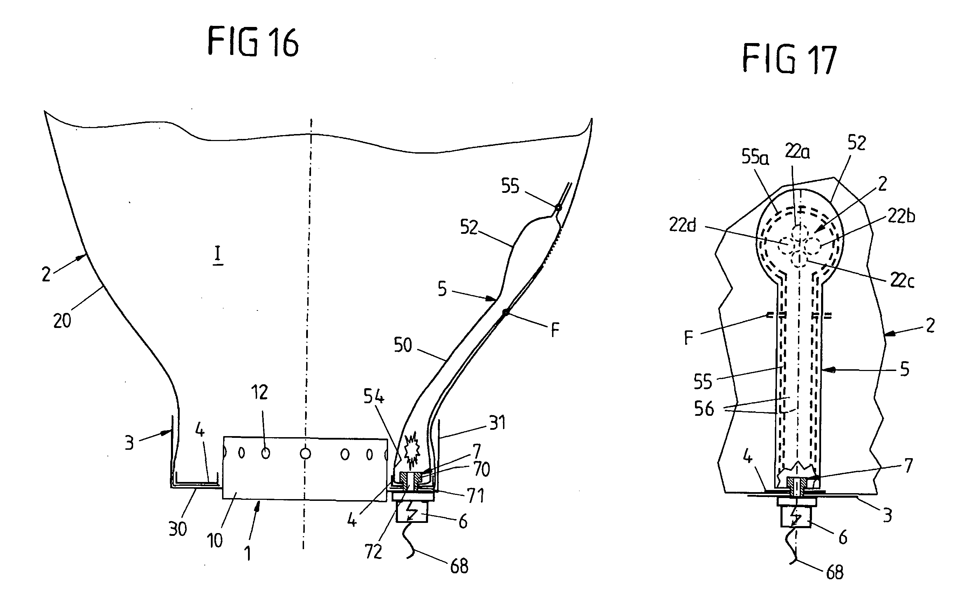

Wie anhand der Figuren 16 und 17 erkennbar ist, wird nach einem Befüllen des aufblasbaren Elementes 5 mit Gas und einem Aufreißen der lösbaren Verbindung L, z.B. als einer Folge von Druck und/oder Temperatur der aus der Gasquelle 6 in das aufblasbare Element 5 einströmenden Gase, das aufblasbare Element 5 gestreckt. Hierbei gerät der ursprünglich zurückgeschlagene Endabschnitt 52 über die durch eine Lochgruppe gebildete Entlüftungsöffnung 22 und verdeckt diese als Abdeckteil. Hierdurch ist die Entlüftungsöffnung 22 verschlossen, wobei der entsprechende Endabschnitt 52 des aufblasbaren Elementes 5 durch den Innendruck des Gassackes 2 in der die Entlüftungsöffnung 22 überdeckenden Stellung gehalten wird, nämlich gegen die Innenwand der Gassackhülle 20 gedrückt wird. Es ist dann kein Gasstrom mehr aus dem Gassack durch die Entlüftungsöffnung 22 hindurch nach außen möglich.

In Abhängigkeit vom Zeitpunkt der Aktivierung der Gasquelle 6 als Betätigungsmechanismus für das durch den Endabschnitt 52 gebildete Abdeckteil kann die Airbaganordnung an unterschiedliche Crash-Situationen angepasst werden.

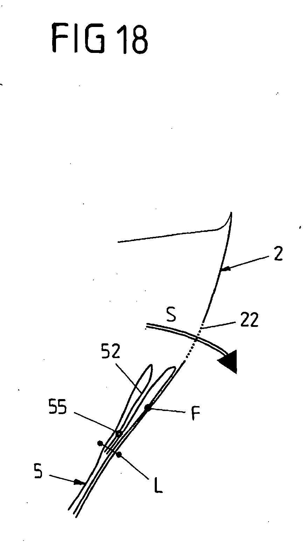

Figur 18 zeigt in einer Detaildarstellung im Bereich der Entlüftungsöffnung 22 eine Abwandlung des Ausführungsbeispieles aus den Figuren 14 und 15 dahingehend, dass das aufblasbare Element 5 an seinem als Abdeckteil dienenden entlüftungsöffnungsseitigen Endabschnitt 52 nach innen eingestülpt und in diesem Zustand mittels einer lösbaren Fixierung L gehalten wird.

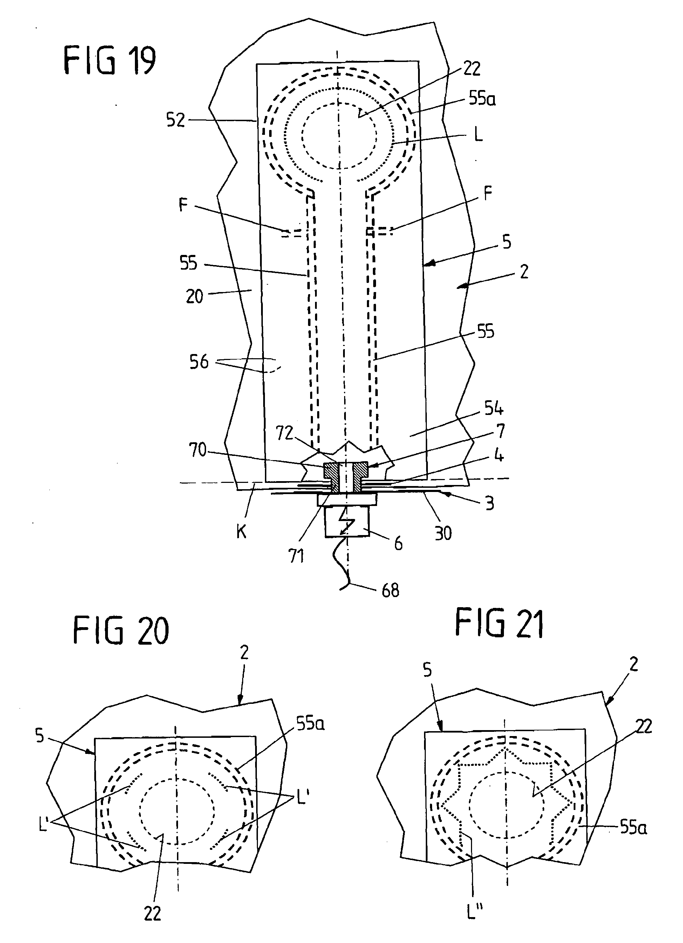

Figur 19 zeigt in einer der Figur 10 entsprechenden Innenansicht eines Gassackes im Bereich des aufblasbaren Elementes 5 eine Weiterbildung der Anordnung aus den Figuren 1 und 10.

Danach ist wie im Ausführungsbeispiel der Figuren 14 bis 17 ein zusätzlicher Verbindungsbereich 55a zwischen den beiden einander gegenüber liegenden Lagen 56 des aufblasbaren Elementes 5 vorgesehen, der hier die Entlüftungsöffnung 22 sowie die lösbare Verbindung L zwischen dem aufblasbaren Element 5 und der Hülle 20 des Gassackes 2 umschließt.

Beim Ausführungsbeispiel der Figur 19 bildet somit die lösbare Fixierung L, zum Beispiel in Form einer Reißnaht, welche die Entlüftungsöffnung 22 umgreift, nicht mehr den (lösbaren) äußeren Verschluss des durch das aufblasbare Element 5 gebildeten Gasleitkanals, sondern sie wird vielmehr von einer zusätzlichen festen Verbindung 55a zwischen den beiden Lagen 56 des aufblasbaren Elementes umgriffen. Die lösbare Fixierung L verläuft somit - in radialer Richtung betrachtet - zwischen der Entlüftungsöffnung 22 und der endseitigen festen Verbindung 55a der beiden Lagen 56 des aufblasbaren Elementes 5.

Bei einer solchen Anordnung steht, abgesehen von Gasleckagen, die gesamte Energie eines aus der Gasquelle austretenden und in das aufblasbare Element 5 eintretenden Gases für das Lösen der lösbaren Verbindung L zur Verfügung, da das aufblasbare Element 5 bzw. der hierdurch gebildete Gaskanal ein geschlossenes Volumen definieren. Hierdurch kann eine Zerstörung der lösbaren Verbindung L mit weniger Gas oder auch weniger heißen Gasen erreicht werden, so dass bei Verwendung einer pyrotechnischen Gasquelle 6 eine entsprechend kleinere pyrotechnische Ladung benötigt wird.

Figur 20 zeigt in einer Detailansicht eine erste Abwandlung des Ausführungsbeispieles aus Figur 19, wonach die lösbare Verbindung L' durch eine Mehrzahl in Umfangsrichtung voneinander beabstandeter Verbindungsbereiche gebildet wird. Dies erleichtert ein Lösen der Fixierung und ist vorteilhaft mit der zusätzlichen festen Verbindung 55a der beiden Lagen 56 des aufblasbaren Elementes 5 kombinierbar.

Figur 21 zeigt in einer Detailansicht eine weitere Abwandlung des Ausführungsbeispiels aus Figur 19, wonach die lösbare Fixierung L" in Umfangsrichtung hintereinander angeordnete Einbuchtungen aufweist, die jeweils spitz in Richtung der Entlüftungsöffnung 22 zulaufen. An diesen spitz zulaufenden Teilabschnitten treten bei Befüllen des aufblasbaren Elementes 5 mit Gas besonders große Spannungen (Spannungsspitzen) auf, so dass die lösbare Fixierung L" dort besonders leicht durch die auftretenden Kräfte zerstörbar ist, womit das Lösen der Fixierung insgesamt erleichtert wird.

Im Ausführungsbeispiel der Figur 21 ist die lösbare Fixierung L" als durchgehende Fixierung vorgesehen, so dass sie ohne weiteres auch ohne die zusätzliche feste Verbindung 55a zwischen den beiden Lagen 56 des aufblasbaren Elementes 5 zur Anwendung kommen kann. Alternativ ist aber auch eine Ausführung mit Unterbrechungen denkbar, ähnlich der Figur 20.

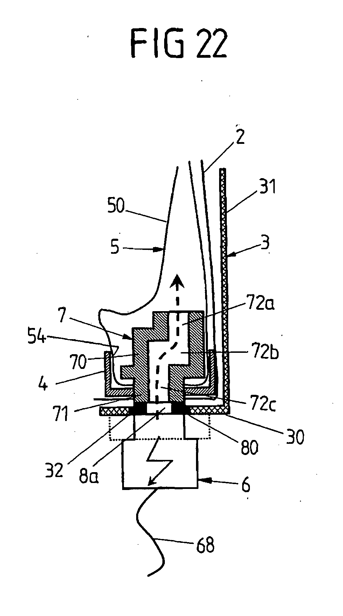

Figur 22 zeigt, aufbauend auf der Anordnung gemäß Figur 5, eine weitere mögliche Ausführung eines Befestigungselementes 7 zur Befestigung des gasquellenseitigen Endabschnittes 54 des aufblasbaren Elementes 5. Danach ist die im Befestigungselement 7 vorgesehene Durchtrittsöffnung für die aus der Gasquelle 6 austretenden Gase derart ausgeführt, dass sie aus mehreren Teilabschnitten 72a, 72b, 72c besteht, die eine Umlenkung des Gasstromes zwischen dem Eintritt (von der Gasquelle 6 her) und dem Austritt (in das aufblasbare Element 5 hinein) bewirken. Hierdurch kann die Austrittsrichtung des Gasstromes relativ zu der Eintrittsrichtung geändert bzw. variiert werden.

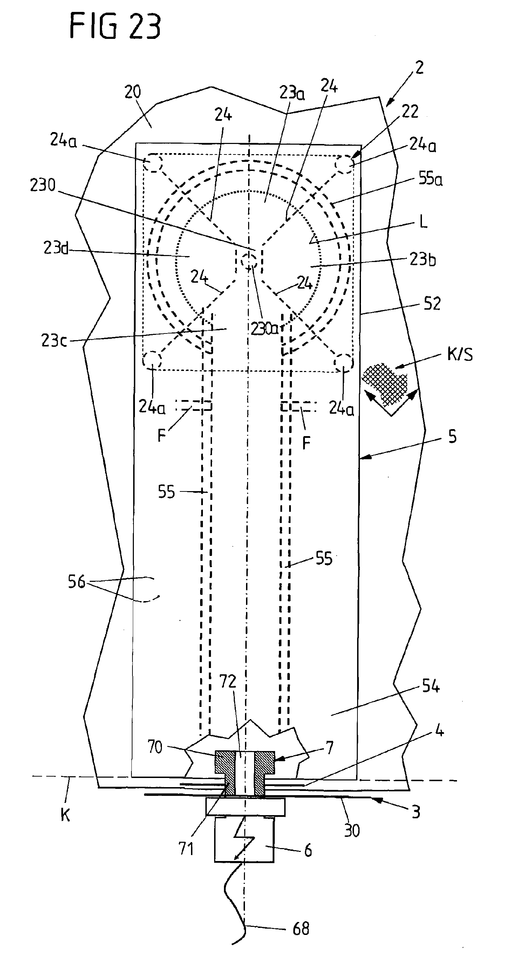

In Figur 23 ist ein weiteres Ausführungsbeispiel in einer Innenansicht gezeigt, und zwar in Abwandlung der entsprechenden Ansicht der Figur 10, wobei zum einen eine die lösbare Verbindung L umgebende zusätzliche feste Verbindung 55a zwischen den beiden Lagen 56 des aufblasbaren Elementes vorgesehen ist, wie vorstehend bereits anhand der Figuren 15 und 19 im Einzelnen erläutert. Wie in Figur 10 ist auch hier der Zustand der Anordnung bei nicht aktivierter Gasquelle 6 dargestellt.

Ein weiterer Unterschied zu dem Ausführungsbeispiel der Figur 10 besteht in der Ausgestaltung der Entlüftungsöffnung 22. Die Entlüftungsöffnung 22 wird im Ausführungsbeispiel der Figur 23 gebildet durch (vier) strahlenförmig verlaufende Schlitze 24 im Material der Hülle 20 des Gassackes 2, die (vier) Segmente 23a, 23b, 23c, 23d in der Hülle 20 des Gassackes 2 bilden bzw. definieren, welche zur Freigabe einer Durchtrittsöffnung für das im Gassack 2 befindliche Gas umgeklappt werden können, sobald die lösbare Fixierung L zwischen dem aufblasbaren Element 5 und der Hülle 20 des Gassackes 2 aufgehoben ist, welche die besagten Segmente 23a, 23b, 23c, 23d mit dem entlüftungsöffnungsseitigen Endabschnitt 52 des aufblasbaren Elementes 5 verbindet. Dabei ragen die Schlitze 24 in der Ansicht der Figur 23 über die lösbare Fixierung L hinaus, dass heißt, die von der lösbaren Fixierung L eingeschlossene Fläche ist geringer als der Querschnitt der nach dem Umklappen der Segmente 23a, 23b, 23c, 23d sich ergebenden Entlüftungsöffnung 22.

Die die Entlüftungsöffnung 22 bildenden Schlitze 24 laufen nach außen hin jeweils in (kreisförmigen) Öffnungen 24a aus, die ein weiteres Aufreißen des Materials der Gassackhülle 20 im Belastungsfall verhindern sollen. Weiterhin verlaufen die Schlitze 24 vorteilhaft in Kette- bzw. Schussrichtung K/S eines die Gassackhülle bildenden Gewebes.

Zur Erleichterung der Montage, insbesondere der Fixierung des aufblasbaren Elementes 5 an der Gassackhülle 20 im Bereich der Segmente 23a, 23b, 23c, 23d, stehen zwei (einander gegenüber liegende) Segmente 23a, 23c über einen (zentralen) Verbindungsbereich 230 miteinander in Verbindung. Dies wird dadurch erreicht, dass die die Entlüftungsöffnung 22 bildenden Schlitze 24 im zentralen Bereich der Entlüftungsöffnung 22 in einem Abstand voneinander enden, so dass zwischen den inneren Enden der Schlitze 24 ein Steg gebildet wird, der als Verbindungsbereich 230 die beiden genannten Segmente 23a, 23c miteinander verbindet.

Der stegartige Verbindungsbereich 230 kann zusätzlich mit einer schwächenden Öffnung 230a versehen sein, um das Aufreißen des Verbindungsbereiches 230 zu erleichtern, so dass im Ergebnis vier lose Segmente gebildet werden können, wenn beim Befüllen des aufblasbaren Elementes 5 mit Gas die lösbare Fixierung L zerstört wird, und die Segmente 23a, 23b, 23c, 23d nicht mehr mit dem aufblasbaren Element 5 verbunden sind.

Die lösbare Fixierung L verläuft im Ausführungsbeispiel vom Zentrum der Entlüftungsöffnung her gesehen, also von der Schwächungsöffnung 230a her betrachtet, zwischen jenem Zentrum und den Schwenkbereichen, um welche die Segmente 23a, 23b, 23c, 23d verschwenkbar sind. Letztere werden im Wesentlichen durch die Lage der Öffnungen 24a definiert, in denen die Schlitze 24 auslaufen. Vorliegend werden die Schwenkbereiche jeweils in etwa durch die (gedachten) Verbindungslinien zwischen einander benachbarten Öffnungen 24a gebildet, wie in Figur 23 in dünner gestrichelter Linie angedeutet. Die Schwenkbereiche verlaufen im Ausführungsbeispiel der Figur 23 parallel zu Rändern des aufblasbaren Elementes 5 und benachbart zu diesen.

Mit der in Figur 23 dargestellten und vorstehend beschriebenen Ausgestaltung der Entlüftungsöffnung 22 einschließlich einer passenden Anordnung der lösbaren Verbindung L zwischen Gassack 2 und aufblasbarem Element 5 ergeben sich eine Reihe zusätzlicher Vorteile: Eine einmal erfolgte Auslegung des aufblasbaren Elementes 5, speziell des hierdurch gebildeten Gaskanals, insbesondere hinsichtlich der Abstimmung bezüglich der Gasquelle 6 und der Dimensionierung der lösbaren Fixierung L sowie des zusätzlichen Verbindungsbereiches 55a ist für unterschiedliche Größen der Entlüftungsöffnung 22 verwendbar, wobei jene Größe einfach über die Länge der die Entlüftungsöffnung 22 definierenden Schlitze 24 an unterschiedliche Verhältnisse angepasst werden kann. Dabei können die Schlitze 24 in dem in Figur 23 gezeigten Zustand auch über den äußeren Rand des aufblasbaren Elementes 5 hinaus verlaufen.

Ein weiteres vorteilhaftes Merkmal der lösbaren Fixierung L ist deren überlappender Verlauf mit den seitlichen Verbindungslinien 55 des aufblasbaren Elementes 5. Dies ermöglicht einen schnellen Druckaufbau im Inneren des aufblasbaren Elementes 5 zum Zerstören der lösbaren Verbindung L, da Letztere und die seitlichen Verbindungslinien 55 im nicht aktivierten Zustand der zusätzlichen Gasquelle 6 ein abgeschlossenes Volumen definieren.

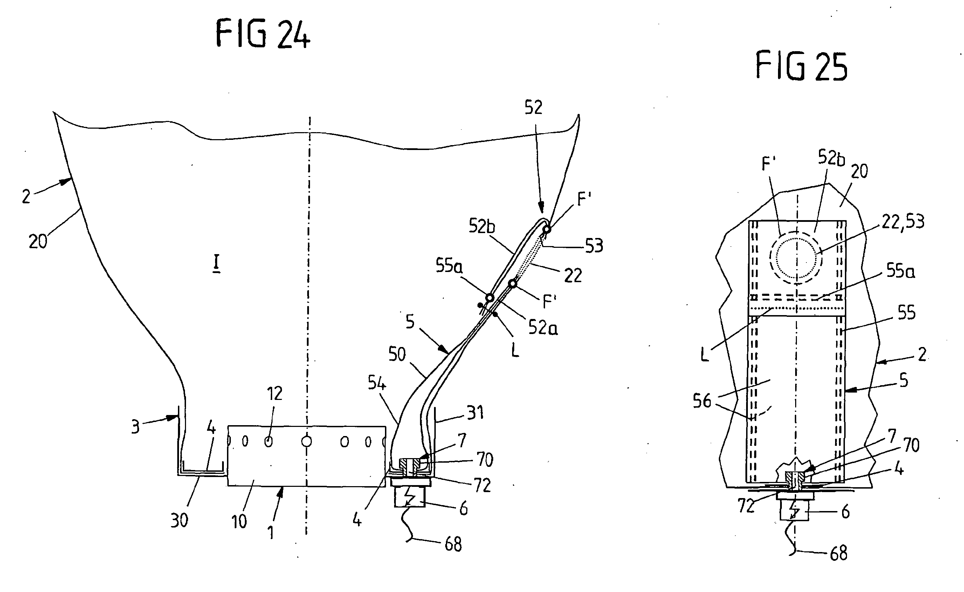

In den Figuren 24 und 25 ist eine Abwandlung des Ausführungsbeispiels der Figuren 1 und 10 gezeigt, wobei die Darstellung der Figur 24 der Figur 1 entspricht und die Darstellung der Figur 25 der Figur 10 entspricht. Nachfolgend werden insbesondere solche Aspekte des Ausführungsbeispieles der Figuren 24 und 25 beschrieben werden, in denen sich dieses vom Ausführungsbeispiel der Figuren 1 und 10 unterscheidet. Im Übrigen wird auf die Beschreibung des in den Figuren 1 und 10 dargestellten Airbagmoduls Bezug genommen.

Gemäß den Figuren 24 und 25 besteht der das Abdeckteil 52 bildende Endabschnitt des aufblasbaren Elementes 5 aus zwei Teilabschnitten 52a, 52b, die übereinandergeschlagen sind, so dass sie jeweils oberhalb der Entlüftungsöffnung 22 des Gassackes 2 angeordnet sind. Dabei grenzt der eine Teilabschnitt 52a unmittelbar an die Entlüftungsöffnung 22 und an die jene Entlüftungsöffnung 22 umgebenden Gassackbereiche, während der andere Teilabschnitt 52b den einen Teilabschnitt 52a überdeckt. Die beiden Teilabschnitte 52a, 52b des Abdeckteiles 52 bestehen dabei jeweils aus zwei Lagen 56 des aufblasbaren Elementes 5.

Der eine Teilabschnitt 52a des Abdeckteiles 52 ist mit einer Durchgangsöffnung 53 versehen, welche derart bezüglich der Entlüftungsöffnung 22 angeordnet ist, dass Gas aus dem Inneren I des Gassackes 2 durch die Durchgangsöffnung 53 und die Entlüftungsöffnung 22 hindurch in die Umgebung austreten könnte. Hierzu ist der eine Teilabschnitt 52a des Abdeckteiles 52 mittels einer permanenten, festen Verbindung F' derart an dem Gassack 2 bzw. genauer an dessen Hülle 20 festgelegt, dass die Entlüftungsöffnung 22 und die Durchgangsöffnung 53 einander überdecken bzw. miteinander fluchten. Konkret verläuft die feste Verbindung F' zwischen dem ersten Teilabschnitt 52a des Abdeckteiles 52 und dem Gassack 2 ringförmig (kreisringförmig) um die Entlüftungsöffnung 22 und die Durchgangsöffnung 53 herum, und zwar insbesondere entlang einer geschlossenen Kontur.

Der andere, zweite Teilabschnitt 52b des Abdeckteiles 52 verschließt zunächst die Entlüftungsöffnung 22 und die Durchgangsöffnung 53, da er über jene Öffnungen geklappt ist und in dieser Lage mittels einer lösbaren Verbindung L, hier in Form einer Naht, fixiert ist, über welche der zweite Teilabschnitt 52b (im Bereich seines freien Endes) mit dem Gassack 2 bzw. dessen Hülle 20 (sowie im Ausführungsbeispiel auch mit dem Abdeckteil 52 bzw. dessen erstem Teilabschnitt 52a) verbunden ist.

Die lösbare Verbindung L ist dabei im Ausführungsbeispiel so ausgeführt, dass sie eine Grenze zwischen dem gasquellenseitigen Endabschnitt 54 und dem das Abdeckteil bildenden Endabschnitt 52 des aufblasbaren Elementes 5 bildet, und zwar derart, dass in den gasquellenseitigen Endabschnitt 54 einströmendes Gas erst dann in den das Abdeckteil bildenden Endabschnitt 52 des aufblasbaren Elementes 5 gelangen kann, wenn die lösbare Verbindung L aufgetrennt worden ist. Hierdurch wird beim Einströmen von der Gasquelle 6 freigesetzten Gases in das aufblasbare Element 5 zunächst nur ein Bereich des aufblasbaren Elementes 5, nämlich der gasquellenseitige Endabschnitt 54, mit Gas befüllt, wodurch ein entsprechend großer Druck aufgebaut wird, der die Tendenz hat, die lösbare Verbindung L aufzutrennen. Hierdurch kann ein Auftrennen dieser Verbindung beim Freisetzen des Gases aus der Gasquelle 6 mit großer Sicherheit gewährleistet werden.

Im Bereich seines freien Endes ist der das Abdeckteil bildende Endabschnitt 52 des aufblasbaren Elementes 5 bzw. genauer dessen anderer, zweiter Teilabschnitt 52b, ähnlich wie im Ausführungsbeispiel der Figuren 14 bis 17, mittels eines zusätzlichen Verbindungsbereiches 55a verschlossen.

Zusätzlich zu der festen Verbindung F', die entlang einer geschlossenen Kontur die Entlüftungsöffnung 22 und die Durchgangsöffnung 53 umläuft, kann eine zusätzliche feste Verbindung F zur Anbindung des aufblasbaren Elementes 5 an den Gassack 2 bzw. dessen Hülle 20 vorgesehen sein, entsprechend der Anordnung einer solchen Verbindung F im Ausführungsbeispiel der Figuren 1 und 10.

Bei Aktivierung der Gasquelle 6, mit dem Ziel, die Entlüftungsöffnung 22 freizugeben, strömt das von der Gasquelle 6 freigesetzte Gas zunächst in den gasquellenseitigen Endabschnitt 54 des aufblasbaren Elementes 5, ohne in den das Abdeckteil bildenden Endabschnitt 52 übertreten zu können; denn die lösbare Verbindung L in Form einer Reißnaht trennt die beiden Endabschnitte 52, 54 des aufblasbaren Elementes 5 zunächst im Wesentlichen gasdicht. Die lösbare Verbindung L definiert also eine Vorkammer in dem aufblasbaren Element 5, die durch dessen gasquellenseitigen Endabschnitt 54 gebildet wird und die zunächst das gesamte von der Gasquelle 6 freigesetzte Gas aufnimmt. Hierdurch entsteht in jenem Bereich des aufblasbaren Elementes 5 ein entsprechend hoher Innendruck, was wiederum entsprechend hohe, auf die lösbare Verbindung L in Form einer Reißnaht wirkende Kräfte zur Folge hat, so dass diese schließlich aufgetrennt wird, also im Ausführungsbeispiel aufreißt.

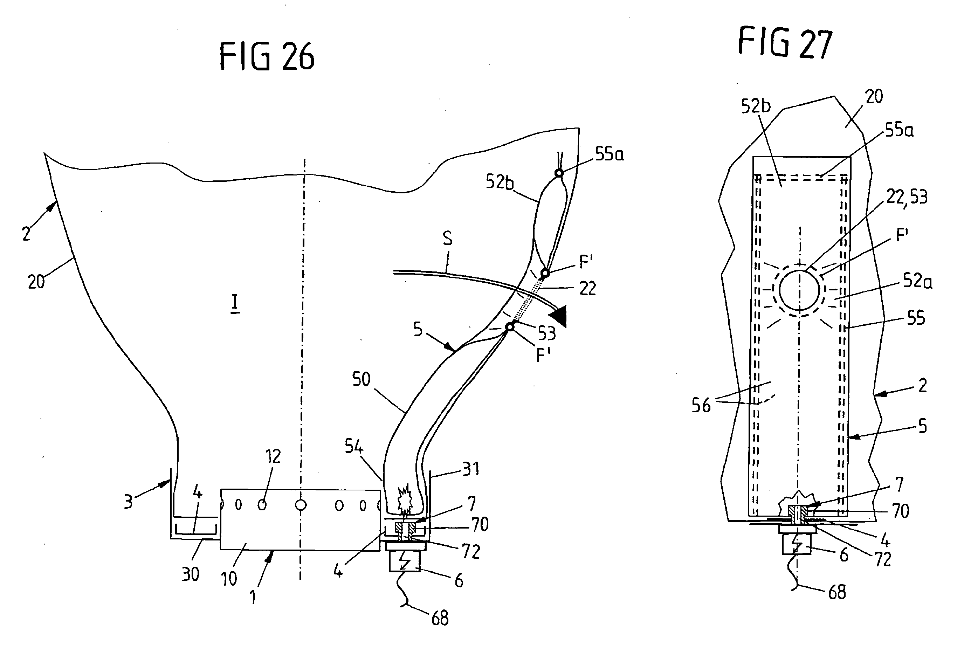

Nach dem Auftrennen der lösbaren Verbindung L strömen die Gase in den das Abdeckteil bildenden Endabschnitt 52 des aufblasbaren Elementes 5 und befüllen insbesondere dessen beide Teilabschnitte 52a, 52b, wodurch der andere, zweite Teilabschnitt 52b umklappt und so die im einen, ersten Teilabschnitt 52a vorgesehene Durchgangsöffnung 53 sowie die Entlüftungsöffnung 22 des Gassackes 2 freigibt, vergleiche den Übergang von den Figuren 24 und 25 zu den Figuren 26 und 27, die in entsprechenden Darstellungen die Situation nach dem Freigeben der Entlüftungsöffnung 22 zeigen.

Es kann dann ein Gasstrom S durch die Durchgangsöffnung 53 und die Entlüftungsöffnung 22 aus dem Inneren I des Gassackes 2 in die Umgebung austreten.

Ein Vorteil der anhand der Figuren 24 bis 27 beschriebenen Ausgestaltung des Abdeckteiles 52 bzw. des aufblasbaren Elementes 5 liegt darin, dass zur vollständigen Freigabe des Austrittsquerschnitts der Entlüftungsöffnung 22 kein Material des Abdeckelementes 52 bzw. des aufblasbaren Elementes 5 in bzw. durch die Entlüftungsöffnung 22 gedrückt werden muss.

Das Umschlagen des anderen Teilabschnittes 52b des Abdeckteiles 52 zur Freigabe der Entlüftungsöffnung 22 kann unter anderem durch die Ausdehnung der Teilabschnitte 52a, 52b quer zur Strömungsrichtung des von der Gasquelle 6 freigesetzten Gases beeinflusst werden, also insbesondere durch die Anordnung und den Verlauf der seitlichen Verbindungslinien 55. So muss deren Verlauf keineswegs zwingend parallel sein, wie in Figur 25 und 27 dargestellt. Beispielsweise kann ein größerer Abstand zwischen den einander gegenüberliegenden Verbindungslinien 55 benachbart zum Gasaustrittsbereich vorgesehen sein.

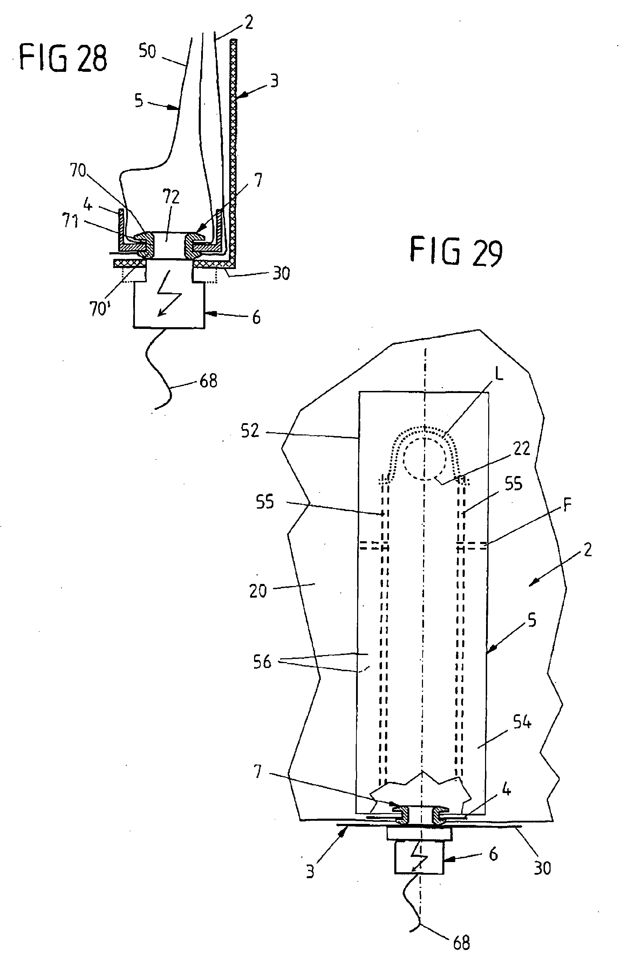

Figur 28 zeigt eine zusätzliche Abwandlung der Anordnung aus Figur 5, und zwar ohne die dortige Schutzfolie (25) und ohne das dortige Dichtelement (80), wobei der wesentliche Unterschied zur Anordnung gemäß Figur 5 im Übrigen in der Ausgestaltung des Befestigungselementes 7 besteht, welches zur Befestigung des aufblasbaren Elementes 5 (innerhalb des Modulgehäuses 3) dient.

Das Befestigungselement 7 umfasst, insoweit noch in Übereinstimmung mit dem Ausführungsbeispiel der Figur 5, einen ersten Bereich 70, der innerhalb des aufblasbaren Elementes 5 liegt, sowie einen hiervon abgesetzten zweiten Bereich 71, der eine Öffnung des aufblasbaren Elementes 5 durchgreift und am Haltering 4 festgelegt ist.

Dabei ist das Befestigungselement 7 im Ausführungsbeispiel der Figur 28 als ein Niet ausgeführt, dessen erster Bereich 70 einen Nietkopf bildet und dessen zweiter Bereich 71 als Nietschaft die besagte Öffnung des aufblasbaren Elementes 5 sowie eine weitere Öffnung im Haltering 4 durchgreift. Konkret ist das Befestigungselement 7 als ein Hohlniet ausgebildet, der eine Durchtrittsöffnung 72 aufweist, durch die hindurch von der Gasquelle 6 freigesetztes Gas in das Innere des aufblasbaren Elementes 5 strömen kann.

Zur Festlegung des Befestigungselementes 7 am Haltering 4, damit hierdurch insbesondere das aufblasbare Element 5 am Haltering 4 (klemmend) befestigt wird, ist vorliegend ein dem ersten Bereich 70 (Nietkopf) gegenüberliegender und an den zweiten Bereich 71 anschließender dritter Bereich 70' des Befestigungselementes 7 vorgesehen, welcher in einer Richtung weg von dem ersten Bereich 70 über den Haltering 4 hinaus steht und zur Bildung einer Nietverbindung plastisch deformiert ist, zum Beispiel umgebördelt wurde. Hierdurch bildet der dritte Bereich 70' einen Hinterschnitt, sodass im Ergebnis der Haltering 4 im Bereich des Randes seiner von dem Befestigungselement 7 durchgriffenen Öffnung zwischen dem ersten Bereich 70 und dem dritten Bereich 70' des Befestigungselementes 7 aufgenommen ist, und zwar zusammen mit dem am Haltering 4 zu befestigenden aufblasbaren Element 5.

Dabei kann sich das Befestigungselement 7 mit seinem dritten Bereich 70' weiterhin durch eine Öffnung in der Hülle 20 des Gassackes 2 hindurch erstrecken. D.h., der dritten Bereich 70' wird dann lateral von der Öffnung in der Hülle 20 umgeben.

Figur 29 zeigt eine Abwandlung der Anordnung aus Figur 10, und zwar beispielhaft unter Verwendung eines Befestigungselementes 7 in Form eines Nietes, wie in Figur 28 dargestellt, was jedoch hinsichtlich der weiteren Unterschiede zwischen den Anordnungen gemäß Figur 29 einerseits und gemäß Figur 10 andererseits nicht zwingend ist. Das heißt, die übrigen Abwandlungen der Figur 29 verglichen mit Figur 10 lassen sich auch bei Verwendung eines anderen Befestigungselementes als in Figur 28 und 29 dargestellt realisieren.

Im Unterschied zum Ausführungsbeispiel der Figur 10 ist vorliegend der Abstand zwischen den Verbindungslinien 55, entlang derer zwei aufeinanderliegende Segmente 56 zur Bildung eines aufblasbaren Elementes 5 (an ihren Randbereichen) miteinander verbunden sind, größer als der Durchmesser der Entlüftungsöffnung 22. Die Verbindungslinien 55 verlaufen im Ausführungsbeispiel parallel zueinander; sie können aber auch winklig zueinander angeordnet sein beziehungsweise allgemeiner einen kurvenförmigen Verlauf aufweisen. In einer Weiterbildung kann zudem der Abstand der Verbindungslinien 55 benachbart zur Gasquelle 6 geringer sein als benachbart zur Entlüftungsöffnung 22.

Gemäß einem weiteren Unterschied zur Anordnung aus Figur 10 verlaufen vorliegend die lösbaren Verbindungsmittel L glockenförmig um die Entlüftungsöffnung 22, zum Beispiel in Form einer doppelten glockenförmigen Reißnaht.

## Patentansprüche

1. Airbagmodul für ein Kraftfahrzeug, mit
- einem Gassack (2), der zum Schutz einer Person mittels eines Gasgenerators (1) aufblasbar ist,
- einer Entlüftungsöffnung (22), durch die hindurch aus dem Airbagmodul stammendes Gas entweichen kann, und
- einer Vorrichtung zur Steuerung des Austrittsquerschnittes der Entlüftungsöffnung (22), die mindestens ein Abdeckteil (52) umfasst, mit dem die Entlüftungsöffnung (22) überdeckbar ist, um diese zumindest teilweise zu verschließen, und die weiterhin einen Betätigungsmechanismus umfasst, der mit dem Abdeckteil (52) zusammenwirkt, um den Austrittsquerschnitt der Entlüftungsöffnung (22) zu verändern,
wobei der Betätigungsmechanismus eine Gasquelle (6) und ein mittels der Gasquelle aufblasbares Element (5) aufweist, welches beim Aufblasen derart mit dem Abdeckteil (52) zusammenwirkt, dass es eine Änderung des Austrittsquerschnittes der Entlüftungsöffnung (22) bewirkt,
**dadurch gekennzeichnet,**
**dass** die Gasquelle (6) des Betätigungsmechanismus von dem Gasgenerator (1) zum Aufblasen des Gassackes (2) verschieden ist und dass das aufblasbare Element (5) in der Umgebung der Gasquelle (6) an einer Modulkomponente (3, 4, 14, 15) befestigt ist, die der Festlegung des Gassackes (2) an dem Airbagmodul und/oder der Aufnahme des Gassackes (2) in dem Airbagmodul dient.

2. Airbagmodul nach Anspruch 1, **dadurch gekennzeichnet, dass** die Entlüftungsöffnung (22) am Gassack (2) vorgesehen ist.

3. Airbagmodul nach Anspruch 1 oder 2, **dadurch gekennzeichnet, dass** das aufblasbare Element (5) einen Gaskanal bildet, der sich von der Gasquelle (6) zu dem Abdeckteil (52) erstreckt.

4. Airbagmodul nach einem der vorhergehenden Ansprüche, **dadurch gekennzeichnet, dass** das aufblasbare Element (5) im Bereich eines gasquellenseitigen Endabschnittes (54) in der Umgebung der Gasquelle (6) an der Modulkomponente (3, 4, 14, 15) befestigt ist.

5. Airbagmodul nach einem der vorhergehenden Ansprüche, **dadurch gekennzeichnet, dass** das aufblasbare Element (5) mittels mindestens eines zusätzlichen Befestigungselementes (7) an der Modulkomponente (3, 4, 14, 15) befestigt ist.

6. Airbagmodul nach einem der vorhergehenden Ansprüche, **dadurch gekennzeichnet, dass** das aufblasbare Element (5) an einer Modulkomponente (3, 4, 14, 15) befestigt ist, die beim Aufblasen des Gassackes (2) ihre Position im Airbagmodul nicht substantiell ändert.

7. Airbagmodul nach einem der vorhergehenden Ansprüche, **dadurch gekennzeichnet, dass** die Modulkomponente (4, 14, 15) im Inneren des Gassackes (2) angeordnet ist und durch ein Halteteil (4, 14, 15) gebildet wird, das der klemmenden Fixierung des Gassackes (2) im Bereich seiner Einblasöffnung am Airbagmodul dient.

8. Airbagmodul nach einem der vorhergehenden Ansprüche, **dadurch gekennzeichnet, dass** die Modulkomponente (3, 4, 14, 15) durch einen Generatorträger, einen Diffusor und/oder durch einen neben dem Gasgenerator (2) verlaufenden Haltering gebildet ist.

9. Airbagmodul nach einem der vorhergehenden Ansprüche, **dadurch gekennzeichnet, dass** das aufblasbare Element (5) an einer Modulkomponente (3) festgelegt ist, in der der Gassack (2) vor dem Aufblasen angeordnet ist oder die an den Gassack (2) angrenzt.

10. Airbagmodul nach Anspruch 9, **dadurch gekennzeichnet, dass** die Modulkomponente (3) durch ein Modulgehäuse oder einen Generatorträger gebildet wird.

11. Airbagmodul nach einem der vorhergehenden Ansprüche, **dadurch gekennzeichnet, dass** mindestens ein Befestigungselement (7), das zur Befestigung des aufblasbaren Elementes (5) an einer Modulkomponente (3, 4, 14, 15) vorgesehen ist, mit einer Durchtrittsöffnung (72) für die Einleitung aus der Gasquelle (6) austretender Gase in das aufblasbare Element (5) versehen ist.

12. Airbagmodul nach einem der der vorhergehenden Ansprüche, **dadurch gekennzeichnet, dass** die Entlüftungsöffnung (22) von einer lösbaren Fixierung (L) des Abdeckteiles (52) an der Hülle (20) des Gassackes (2) umgriffen wird.

13. Airbagmodul nach einem der vorhergehenden Ansprüche, **dadurch gekennzeichnet, dass** das Abdeckteil (52) durch einen Abschnitt des aufblasbaren Elementes (5) gebildet wird.

14. Airbagmodul nach einem der vorhergehenden Ansprüche, **dadurch gekennzeichnet, dass** das aufblasbare Element (5) an einem Endabschnitt im Bereich des Abdeckteiles (52) durch einen zusätzlichen Verbindungsbereich (55a) fest verschlossen ist.

15. Airbagmodul nach einem der vorhergehenden Ansprüche, **dadurch gekennzeichnet, dass** das Abdeckteil (52) zum Verschließen der Entlüftungsöffnung (22) mit zwei Teilabschnitten (52a, 52b) auf der Entlüftungsöffnung (22) aufliegt, von denen der eine Teilabschnitt (52a) eine Durchgangsöffnung (53) aufweist, die das Austreten von Gas aus dem Gassack (2) durch die Entlüftungsöffnung (22) hindurch zulässt, und von denen der andere Teilabschnitt (52b) die Entlüftungsöffnung (22) zusammen mit der Durchgangsöffnung (53) verschließt.

## Claims

1. An airbag module for a motor vehicle, comprising
- a gas bag (2) which for the protection of a person is inflatable by means of a gas generator (1),
- a vent opening (22) through which gas originating from the airbag module can escape, and
- a device for controlling the outlet cross-section of the vent opening (22), which comprises at least one covering member (52) with which the vent opening (22) can be covered, in order to at least partly close the same, and which furthermore comprises an actuating mechanism which cooperates with the covering member (52), in order to vary the outlet cross-section of the vent opening (22),
wherein the actuating mechanism includes a gas source (6) and an element (5) inflatable by means of the gas source, which during inflation cooperates with the covering member (52) such that it effects a change in the outlet cross-section of the vent opening (22),
**characterized in**
**that** the gas source (6) of the actuating mechanism is different from the gas generator (1) for inflating the gas bag (2) and that the inflatable element (5) in the surroundings of the gas source (6) is attached to a module component (3, 4, 14, 15) which serves the fixation of the gas bag (2) on the airbag module and/or the accommodation of the gas bag (2) in the airbag module.

2. The airbag module according to claim 1, **characterized in that** the vent opening (22) is provided on the gas bag (2).

3. The airbag module according to claim 1 or 2, **characterized in that** the inflatable element (5) forms a gas duct which extends from the gas source (6) to the covering member (52).

4. The airbag module according to any of the preceding claims, **characterized in that** the inflatable element (5) is attached to the module component (3, 4, 14, 15) in the region of a gas-source-side end portion (54) in the surroundings of the gas source (6).

5. The airbag module according to any of the preceding claims, **characterized in that** the inflatable element (5) is attached to the module component (3, 4, 14, 15) by means of at least one additional fastening element (7).

6. The airbag module according to any of the preceding claims, **characterized in that** the inflatable element (5) is attached to a module component (3, 4, 14, 15) which during inflation of the gas bag (2) does not substantially change its position in the airbag module.

7. The airbag module according to any of the preceding claims, **characterized in that** the module component (4, 14, 15) is arranged in the interior of the gas bag (2) and is formed by a holding member (4, 14, 15) which serves the clamping fixation of the gas bag (2) in the region of its inflation opening on the airbag module.

8. The airbag module according to any of the preceding claims, **characterized in that** the module component (3, 4, 14, 15) is formed by a generator support, a diffuser and/or by a retaining ring extending beside the gas generator (2).

9. The airbag module according to any of the preceding claims, **characterized in that** the inflatable element (5) is fixed on a module component (3) in which the gas bag (2) is arranged before inflation or which adjoins the gas bag (2).

10. The airbag module according to claim 9, **characterized in that** the module component (3) is formed by a module housing or a generator support.

11. The airbag module according to any of the preceding claims, **characterized in that** at least one fastening element (7), which is provided for attaching the inflatable element (5) to a module component (3, 4, 14, 15), is provided with a through opening (72) for introducing gases exiting from the gas source (6) into the inflatable element (5).

12. The airbag module according to any of the preceding claims, **characterized in that** the vent opening (22) is enclosed by a releasable fixation (L) of the covering member (52) on the envelope (20) of the gas bag (2).

13. The airbag module according to any of the preceding claims, **characterized in that** the covering member (52) is formed by a portion of the inflatable element (5).

14. The airbag module according to any of the preceding claims, **characterized in that** on an end portion in the region of the covering member (52) the inflatable element (5) is firmly closed by an additional connecting region (55a).

15. The airbag module according to any of the preceding claims, **characterized in that** for closing the vent opening (22) the covering member (52) rests on the vent opening (22) with two sections (52a, 52b), of which the one section (52a) includes a through opening (53) which permits the exit of gas from the gas bag (2) through the vent opening (22), and of which the other section (52b) closes the vent opening (22) together with the through opening (53).

## Revendications

1. Module d'airbag pour un véhicule automobile avec
- un sac à gaz (2) qui peut être gonflé pour la protection d'une personne à l'aide d'un générateur de gaz (1),
- une ouverture de ventilation (22) par laquelle du gaz provenant du module d'airbag peut s'échapper, et
- un dispositif pour commander de la section transversale de sortie de l'ouverture de ventilation (22), qui comporte au moins une partie de recouvrement (52), avec laquelle l'ouverture de ventilation (22) peut être recouverte afin de la fermer au moins en partie, et qui comporte en outre un mécanisme d'actionnement qui coagit avec la partie de recouvrement (52) afin de modifier la section de sortie de l'ouverture de ventilation (22),
le mécanisme d'actionnement présentant une source de gaz (6) et un élément gonflable (5) à l'aide de la source de gaz, qui coagit lors du gonflage avec la partie de recouvrement (52) de manière à provoquer une modification de la section de sortie de l'ouverture de ventilation (22),
**caractérisé en ce que**
la source de gaz (6) du mécanisme d'actionnement est différente du générateur de gaz (1) utilisé pour le gonflage du sac à gaz (2) et **en ce que** l'élément gonflable (5) est fixé à proximité de la source de gaz (6) sur un composant modulaire (3, 4, 14, 15) qui sert à la fixation du sac à gaz (2) sur le module d'airbag et/ou à la réception du sac à gaz (2) dans le module d'airbag.

2. Module d'airbag selon la revendication 1, **caractérisé en ce que** l'ouverture de ventilation (22) est prévue sur le sac à gaz (2).

3. Module d'airbag selon la revendication 1 ou 2, **caractérisé en ce que** l'élément gonflable (5) forme un canal de gaz qui s'étend de la source de gaz (6) à la partie de recouvrement (52).

4. Module d'airbag selon l'une quelconque des revendications précédentes, **caractérisé en ce que** l'élément gonflable (5) est fixé dans la zone d'une section d'extrémité (54) du côté source de gaz, à proximité de la source de gaz (6) sur le composant modulaire (3, 4, 14, 15).

5. Module d'airbag selon l'une quelconque des revendications précédentes, **caractérisé en ce que** l'élément gonflable (5) est fixé à l'aide d'au moins un élément de fixation (7) supplémentaire sur le composant modulaire (3, 4, 14, 15).

6. Module d'airbag selon l'une quelconque des revendications précédentes, **caractérisé en ce que** l'élément gonflable (5) est fixé sur un composant modulaire (3, 4, 14, 15) qui ne modifie pas sensiblement sa position dans le module d'airbag lors du gonflage du sac à gaz (2).

7. Module d'airbag selon l'une quelconque des revendications précédentes, **caractérisé en ce que** le composant modulaire (4, 14, 15) est disposé à l'intérieur du sac à gaz (2) et est formé par une partie de retenue (4, 14, 15) qui sert à la fixation par serrage du sac à gaz (2) dans la zone de son ouverture d'insufflation sur le module d'airbag.

8. Module d'airbag selon l'une quelconque des revendications précédentes, **caractérisé en ce que** le composant modulaire (3, 4, 14, 15) est formé par un support de générateur, un diffuseur et/ou par un anneau de retenue s'étendant à côté du générateur de gaz (2).

9. Module d'airbag selon l'une quelconque des revendications précédentes, **caractérisé en ce que** l'élément gonflable (5) est fixé sur un composant modulaire (3), dans lequel le sac à gaz (2) est disposé avant le gonflage ou qui est contigu au sac à gaz (2).

10. Module d'airbag selon la revendication 9, **caractérisé en ce que** le composant modulaire (3) est formé par un boîtier modulaire ou un support de générateur.

11. Module d'airbag selon l'une quelconque des revendications précédentes, **caractérisé en ce qu'**au moins un élément de fixation (7) qui est prévu pour la fixation de l'élément gonflable (5) sur un composant modulaire (3, 4, 14, 15), est pourvu d'une ouverture de passage (72) pour l'introduction des gaz sortant de la source de gaz (6) dans l'élément gonflable (5).

12. Module d'airbag selon l'une quelconque des revendications précédentes, **caractérisé en ce que** l'ouverture de ventilation (22) est entourée par une fixation détachable (L) de la partie de recouvrement (52) sur l'enveloppe (20) du sac à gaz (2).

13. Module d'airbag selon l'une quelconque des revendications précédentes, **caractérisé en ce que** la partie de recouvrement (52) est formée par une section de l'élément gonflable (5).

14. Module d'airbag selon l'une quelconque des revendications précédentes, **caractérisé en ce que** l'élément gonflable (5) est fixement fermé sur une section d'extrémité dans la zone de la partie de recouvrement (52) par une zone de liaison (55a) supplémentaire.

15. Module d'airbag selon l'une quelconque des revendications précédentes, **caractérisé en ce que** la partie de recouvrement (52) repose sur l'ouverture de ventilation (22) avec deux sections partielles (52a, 52b) pour la fermeture de l'ouverture de ventilation (22), et une de ces sections partielles (52a) présente une ouverture de passage (53) qui permet la sortie de gaz hors du sac à gaz (2) par l'ouverture de ventilation (22), et l'autre section partielle (52b) ferme l'ouverture de ventilation (22) conjointement avec l'ouverture de passage (53).
